# DEMANDE DE BREVET EUROPEEN

(11) **EP 2 407 920 A1**
(43) Date de publication de la demande: **18.01.2012**
(21) Numéro de dépôt: 11305934.9
(22) Date de dépôt: 18.07.2011
(51) Int. Cl.: G06Q 20/00

(54) **Serveur, terminal et procédé de transaction sécurisée**

(30) Priorité: 16.07.2010 FR 1055817
(71) Demandeur: Xiring, 92150 Suresnes (FR); CIRRA, 69009 Lyon (FR); MONECAM, 69009 Lyon (FR)
(72) Inventeur: Cogneau, Laurent, 95120 Ermont (FR)
(74) Mandataire: Debay, Yves

(57) **Abrégé**

La présente invention concerne un serveur (3), un terminal (2) et un procédé de transaction, via au moins un réseau (RC) de communication, entre un porteur d'une carte (1) lue par un terminal (2) de transaction et au moins un serveur (4) d'au moins un acquéreur fournissant des paramètres (P) définissant des informations nécessaires à la transaction, une application (310) du serveur (3) est configurée d'après des lesdits paramètres (P) et agencée pour contrôler ledit terminal (2) en coopérant avec une application (210) du terminal (2), par l'intermédiaire d'au moins un message transmis audit terminal (2) et généré d'après lesdits paramètres (P), chaque message comprenant des données représentatives d'au moins une instruction à traiter, l'application (210) du terminal étant agencée pour fournir audit serveur (3) un message de réponse comprenant des données représentatives du résultat du traitement de ladite instruction, permettant audit serveur (3) d'utiliser les résultats reçus pour collecter et fournir au serveur acquéreur (4) lesdites informations nécessaires à la transaction.

## Description

La présente invention concerne le domaine des transactions sécurisées par carte, notamment à l'aide d'un terminal, par exemple tel qu'un terminal de paiement électronique (TPE). Un TPE est un appareil électronique généralement capable de lire les données d'une carte (bancaire par exemple), d'enregistrer une transaction, et de communiquer avec un serveur d'authentification à distance. Un TPE peut lire une carte grâce à son lecteur de carte à puce ou par son lecteur de piste magnétique. Il a généralement la possibilité de se connecter à un serveur d'authentification grâce à des moyens de communications. La carte lue peut-être une carte bancaire (de type EMV par exemple), un porte-monnaie électronique (par exemple, système Moneo en France), ou tout autre carte à puce (carte vitale par exemple) ou à piste magnétique ou une carte au format SIM par exemple. L'éventail des cartes lues et des transactions réalisables par un TPE dépend en général de l'application (ou logiciel) de transaction chargée dans la mémoire du TPE. En France, les différents logiciels de transaction, en particulier pour les paiements, sont développés à partir de spécifications techniques présentées dans le Manuel du Paiement Electronique (MPE) établi par le Groupement des Cartes Bancaires CB.

Pour utiliser un TPE, un détenteur de TPE, comme par exemple un commerçant (communément appelé « accepteur » dans le domaine des cartes bancaires), doit passer un contrat avec sa banque (communément appelée « acquéreur » dans le domaine des cartes bancaires). Ce contrat permet notamment de fixer un montant maximal de transaction au-dessus duquel une autorisation est obligatoire, ainsi que le montant que la banque prélèvera sur chaque paiement effectué (commission). On utilise en général l'acronyme CB2A (« Carte Bancaire Accepteur Acquéreur ») pour désigner les interfaces, protocoles et couches applicatives mises en oeuvre entre ces entités, lors de l'utilisation d'un service (lors d'une transaction) par le détenteur d'une carte (communément appelé « porteur » dans le domaine des cartes bancaires). On parle de système d'acceptation pour désigner tous les équipements d'un accepteur de paiement bancaire. L'acquéreur traite les transactions de l'accepteur et gère en outre les autorisations de l'accepteur qui lui est affilié vers les banques des porteurs qui réalisent des transactions auprès de l'accepteur. Les paramètres d'initialisation des applications de transaction du système d'acceptation sont généralement transmis par l'acquéreur. Les transactions réalisées auprès de l'accepteur (abouties ou non) sont généralement transmises à l'acquéreur sous forme de remise (par télécollecte). On utilise dans la présente demande les termes connus dans le domaine bancaire pour identifier les différentes entités ou personnes impliquées mais l'invention n'est bien entendue pas limitée à ces entités ou personnes qui ne sont que des exemples illustratifs et non limitatifs de l'utilisation qui peut être faite de l'invention. Ainsi, le terme accepteur doit être interprété comme désignant le détenteur du terminal (appelé terminal de paiement, mais qui peut ne pas servir au paiement, ou pas uniquement), le terme acquéreur doit être interprété comme désignant l'entité auprès de laquelle l'accepteur réalise la transaction, le terme porteur doit être interprété comme désignant le détenteur d'une carte à puce et/ou à piste magnétique (celui qui l'utilise dans l'invention, qu'elle lui appartienne ou non), etc.

Un problème dans les systèmes connus concerne le fait que les TPE contiennent une application de transaction qui doit être chargée dans une mémoire. Les TPE présentent donc l'inconvénient d'être des objets sensibles car ils peuvent être utilisés de manière frauduleuse et examinés pour déterminer quelles sont les applications qu'ils contiennent et quels sont les mécanismes de sécurité mis en oeuvre pour les transactions. D'autre part, les TPE présentent donc également l'inconvénient d'être des objets coûteux car ils nécessitent des moyens de mémorisation et des moyens de traitement de données plus ou moins importants selon l'application qu'ils doivent exécuter. De plus, ce problème de l'implémentation d'une application de transaction dans les TPE s'accompagne d'inconvénients liés à la mise à jour de l'application en fonction de l'évolution des standards des acquéreurs. Cette mise à jour de l'application est peu pratique car il faut accéder au TPE pour en modifier l'application. Il est connu dans l'art antérieur des systèmes dans lesquels les TPE, dits légers, n'intègrent pas d'application de transaction et se limitent à transmettre, de manière unidirectionnelle, des informations lues de la carte, généralement à bande magnétique, vers un serveur de transaction. Cependant, ces solutions présentent l'inconvénient de ne pas permettre l'implémentation de mécanismes de sécurité supplémentaires, ce qui les rends non conformes à de nombreux standards de sécurité, notamment du domaine bancaire. Enfin, les TPE de l'art antérieur présentent également l'inconvénient de comporter une application qui est dédiée à un contrat bancaire et à un seul. Ainsi, l'accepteur ayant un contrat auprès d'un acquéreur ne peut réaliser, avec son TPE, des transactions qu'auprès de l'acquéreur avec lequel il a un contrat. Les acquéreurs transmettent en effet au moins les paramètres de l'application à utiliser par l'accepteur.

Ces inconvénients liés au problème de l'implémentation de l'application de transaction dans les TPE se répercutent sur le déploiement de parcs de TPE importants. Le déploiement de parcs importants est en effet coûteux, peu pratique de mise en oeuvre et mise à jour. De plus, le fait qu'une application soit restreinte à un acquéreur peut être un frein au déploiement de parcs importants.

Un autre problème dans le domaine des transactions sécurisées par carte concerne la gestion et l'administration des transactions. En effet, dans l'art antérieur, les TPE enregistrent les transactions et transmettent à l'établissement acquéreur, souvent en fin de journée, une collecte des transactions réalisées. L'accepteur n'a aucun accès à ces collectes et ne dispose souvent, pour sa gestion, que des tickets imprimés lors des transactions.

Dans ce contexte, on comprend donc que les solutions de l'art antérieur posent des problèmes techniques liés à divers inconvénients qu'il convient de surmonter. Il existe en effet un besoin pour des solutions efficaces, économiques et faciles à mettre en oeuvre, facilitant la gestion et l'administration et facilitant le déploiement de parcs de TPE dont l'évolution des applications est facilitée et qui ne soient pas limitées dans leur utilisation à un seul acquéreur.

Un but de la présente invention est donc de pallier au moins certains inconvénients de l'art antérieur en proposant un serveur de transaction.

Ce but est atteint par un serveur de transaction, via au moins un réseau de communication, entre un porteur d'une carte lue par un terminal de transaction et au moins un serveur d'au moins un acquéreur fournissant des paramètres définissant des informations nécessaires à la transaction, ledit serveur de transaction comportant des moyens de traitement de données et des moyens de communication avec ledit terminal et ledit serveur acquéreur, via ledit réseau, ledit terminal comportant des moyens d'échange de données avec au moins une carte, des moyens de communication via ledit réseau et des moyens de traitement de données, ledit serveur de transaction étant caractérisé en ce que :
- lesdits moyens de traitement du serveur exécutent au moins une application de transaction configurée d'après lesdits paramètres,
- ladite application de transaction est agencée pour contrôler ledit terminal en coopérant, au travers dudit réseau, avec au moins une application exécutée sur lesdits moyens de traitement du terminal, par l'intermédiaire d'au moins un message généré d'après lesdits paramètres et transmis audit terminal, chaque message comprenant des données représentatives d'au moins une instruction à traiter,
- ladite instruction est formatée par ladite application de transaction, pour définir au moins une action et/ou au moins un échange de données avec la carte à réaliser par le terminal, ladite application de ce dernier étant agencée pour fournir audit serveur un message de réponse comprenant des données représentatives du résultat du traitement de ladite instruction,
- ladite application de transaction du serveur est également agencée pour utiliser les résultats reçus pour collecter et fournir au serveur acquéreur (4) lesdites informations nécessaires à la transaction.

On comprend donc que l'invention permet de déporter dans un serveur les fonctionnalités normalement implémentées dans les terminaux et de contrôler le terminal à partir du serveur pour réaliser la transaction grâce aux données de la carte obtenues par le terminal, par l'utilisation d'une application sur le serveur coopérant avec une application sur le terminal. Cet agencement fourni d'autres avantages et permet d'autres particularités décrits dans la présente demande. En outre, le terminal mis en oeuvre dans la présente invention peut donc avoir des capacités de traitement plus limitées que les terminaux classiquement utilisés dans le domaine car il lui suffit d'implémenter une application coopérant avec l'application du serveur, en plus de ses moyens d'échanges de données avec la carte, eu lieu de nécessiter d'implémenter les applications de transaction qui sont généralement requises dans ce domaine. De plus, cet agencement facilite la gestion et l'administration des transactions, notamment pour les accepteurs. D'autre part, l'invention peut être utilisée pour une pluralité d'accepteurs et/ou d'acquéreurs, notamment grâce au serveur de transaction. Enfin, par la disponibilité du serveur de transaction, la mise à jour des applications de transaction est facilitée car l'application du serveur peut être modifiée, notamment avec de nouveaux paramètres fournis par les acquéreurs et l'application du terminal n'aura généralement pas besoin d'être modifiée dans la présente invention lors de ces mises à jour. De plus, le fait que l'application de transaction du serveur soit configurée d'après les paramètres fournis par les acquéreurs permet d'augmenter la sécurité de la transaction, notamment dans certains modes de réalisation où ces paramètres sont fournis dynamiquement au travers du réseau.

Un autre but de la présente invention est de pallier au moins certains inconvénients de l'art antérieur en proposant un terminal de transaction permettant réaliser des transactions sécurisées via un réseau de communication, qui soit peu coûteux et simple à déployer chez les accepteurs et qui permette de s'affranchir des inconvénients liés aux mises à jour des applications de transaction.

Ce but est atteint par un terminal de transaction, pour réaliser une transaction via au moins un réseau de communication, entre un porteur d'une carte lue par ledit terminal et au moins un serveur d'au moins un acquéreur fournissant des paramètres définissant des informations nécessaires à la transaction, ledit terminal comportant des moyens d'échange de données avec au moins une carte, des moyens de communication via ledit réseau et des moyens de traitement de données, ledit terminal de transaction étant caractérisé en ce que :
- lesdits moyens de communication du terminal sont agencés pour communiquer avec au moins un serveur de transaction comportant des moyens de communication avec ledit terminal et ledit serveur acquéreur, via ledit réseau, et des moyens de traitement de données exécutant au moins une application de transaction configurée d'après lesdits paramètres ,
- lesdits moyens de traitement du terminal exécutent une application agencée pour permettre le contrôle du terminal par ladite application de transaction du serveur en coopérant avec cette dernière, au travers dudit réseau, par l'intermédiaire d'au moins un message généré d'après lesdits paramètres et transmis audit terminal, chaque message comprenant des données représentatives d'au moins une instruction à traiter, pour définir au moins une action et/ou au moins un échange de données avec la carte à réaliser par le terminal,
- ladite application du terminal est agencée pour traiter ladite instruction et fournir audit serveur un message de réponse comprenant des données représentatives du résultat du traitement de ladite instruction, de manière à ce que ladite application du serveur puisse utiliser les résultats qui lui sont envoyés pour collecter et fournir au serveur acquéreur (4) lesdites informations nécessaires à la transaction.

Un autre but de la présente invention est de pallier au moins certains inconvénients de l'art antérieur en proposant un procédé permettant réaliser des transactions sécurisées via un réseau de communication.

Ce but est atteint par un procédé de transaction via au moins un réseau de communication, entre un porteur d'une carte lue par un terminal de transaction et un serveur d'au moins un acquéreur, ledit terminal comprenant des moyens d'interaction avec le porteur, des moyens d'échange de données avec au moins une carte, des moyens de communication et des moyens de traitement de données pour requérir la transaction, le procédé étant caractérisé en ce qu'il est mis en oeuvre par une application exécutée sur lesdits moyens de traitement et coopérant avec une application de transaction exécutée sur des moyens de traitement de données d'un serveur de transaction, grâce à des moyens de communication, et configurée d'après des paramètres fournis par ledit acquéreur et définissant des informations nécessaires à la transaction, obtenues par au moins une étape de transmission entre le serveur de transaction et le serveur acquéreur, suite à au moins une itération des étapes suivantes :
- transmission d'un message au terminal, par ladite application de transaction, chaque message comprenant des données représentatives d'au moins une instruction à traiter par le terminal,
- traitement de ladite instruction par l'application du terminal, par au moins un échange de données avec la carte et/ou au moins une action sur lesdits moyens d'interaction,
- transmission d'un message de réponse comprenant des données représentatives du résultat du traitement de ladite instruction, par le terminal au serveur,
- traitement dudit message de réponse et utilisation du résultat par ladite application du serveur pour collecter lesdites informations.

D'autres particularités et avantages de la présente invention apparaîtront plus clairement à la lecture de la description ci-après, faite en référence aux dessins annexés, dans lesquels :
- la figure 1 représente un système de transaction selon un mode de réalisation de l'invention,
- la figure 2 représente un système de transaction selon un mode de réalisation de l'invention, avec un détail d'un exemple d'architecture du serveur de transaction,
- la figure 3 représente un exemple d'agencement des moyens de traitement du serveur de transaction selon un mode de réalisation de l'invention,
- la figure 4 représente diverses étapes du procédé de transaction selon un mode de réalisation de l'invention.

La présente invention concerne un serveur (3), un terminal (2) et un procédé de transaction sécurisée par carte. L'invention concerne donc également le système comportant au moins un serveur (3) et au moins un terminal (2) selon l'invention. On notera que lorsque l'on réfère à un dispositif (terminal, serveur, etc.) dans la présente demande, on entend « au moins un » dispositif puisqu'il sera à la portée de l'homme de métier de les multiplier ou même de répartir les fonctions décrites ici pour chacun de ces dispositifs (décrits généralement en termes fonctionnels) sur plusieurs dispositifs, par exemple du même type. De plus, on notera que certains modes de réalisation de la présente invention présentent comme avantage, en outre, de faciliter le déploiement de parcs de terminaux (2), notamment car les terminaux (2) de la présente invention peuvent être moins coûteux que les terminaux (2) connus réalisant l'ensemble des étapes nécessaires pour les transactions et que l'invention prévoit une centralisation de la gestion de terminaux (2) d'au moins un accepteur sur au moins un serveur (3) d'un concentrateur. L'invention est donc particulièrement avantageuse dans un parc d'une grande pluralité de terminaux (2), bien qu'elle puisse être utilisée avec un seul terminal (2).

La présente invention tire avantage des cartes à puce sécurisées, comme par exemple les « cartes bancaires » ou « cartes à puce de paiement », notamment telles que celles connues sous le nom de EMV (pour « Europay Mastercard Visa ») permettant de sécuriser les paiements réalisés grâce à la puce (par exemple de type ISO 7816) de la carte comportant au moins une clé de cryptage et éventuellement grâce au code d'identification associé (numéro d'identification personnel, PIN pour « Personal Identification Number » selon la terminologie anglo-saxonne). On notera que la présente invention est particulièrement adaptée pour réaliser des paiements par carte sur des TPE, mais qu'elle peut également être utilisée pour divers types d'échanges sécurisés d'informations. Ainsi par exemple, la présente invention est adaptée à l'utilisation d'autres cartes, par exemple telles que les cartes vitales, les cartes des professionnels de santé (CPS) ou tout autre type de carte dont la puce stocke au moins une clé de cryptage, de manière à sécuriser des échanges de données de n'importe quel type (ces échanges étant regroupés ici sous le terme « transaction »). En fait, l'invention peut éventuellement évoluer en fonction de l'évolution des standards des cartes, notamment les cartes EMV, et l'on parlera dans la présente demande d'une manière générale de « carte » pour désigner de telles cartes à puce et/ou à piste magnétique.

Le terme « transaction » peut désigner, dans la présente demande, tout type de transmission de données, généralement sécurisée grâce à la carte utilisée, via au moins un réseau de communication. Ainsi, le terme « transaction » pourra concerner une transaction par exemple de type bancaire (par exemple un paiement auprès d'un commerçant) mais pourra concerner en fait d'autres types de transmissions de données (par exemple dans le cas d'envoi d'informations personnelles, notamment lors de l'utilisation d'une carte vitale ou autre). Ces « transactions » sont désignées ici comme étant effectuées entre au moins un « porteur » qui est le détenteur d'une carte (1) à puce et/ou à piste magnétique (comme expliqué dans le préambule de la présente demande) et au moins une entité désignée sous le terme de « acquéreur » (par exemple un établissement bancaire, un organisme privé ou public, etc. , comme expliqué dans le préambule de la présente demande), qui possède un équipement classique dans le domaine bancaire, pour permettre les paiements chez des accepteurs ayant passé contrat avec l'acquéreur. Cet équipement est désigné ici sous le terme de « au moins un serveur (4) acquéreur », comme détaillé ci-après. La transaction est réalisée à l'aide d'un terminal de transaction (2) d'une entité désignée sous le terme de « accepteur », comme expliqué dans le préambule de la présente demande. On référera dans la présente description à un TPE (pour « terminal de paiement électronique », selon la terminologie classique dans le domaine bancaire) pour désigner ces terminaux de transaction, sans que cette terminologie n'implique de limitation car le serveur, le terminal (TPE) et le procédé de la présente invention peuvent être utilisés pour d'autres types de transaction que des paiements, bien qu'ils soient particulièrement adaptés aux exigences fortes de cette application particulière.

La présente invention prévoit également de permettre, dans certains modes de réalisation, l'intervention d'une entité tierce (entre l'acquéreur (4) et le TPE (2) de l'accepteur), désignée sous le nom de « concentrateur », qui fournit le serveur de transaction (3) et permet la centralisation des transactions de multiples accepteurs et de multiples acquéreurs, avec de multiples applications de transaction. Cependant, il sera compris par l'homme de métier que le serveur de transaction n'est pas nécessairement détenu par une entité tierce et que, par exemple, un acquéreur pourrait fournir un tel serveur, bien que l'indépendance du concentrateur soit préférable pour la gestion des transactions de multiples acquéreurs.

La présente invention prévoit également de permettre, dans certains modes de réalisation, l'intervention d'autres entités, comme par exemple les établissements « émetteurs » tels que les banques émettrices auprès desquelles les porteurs ont obtenu leur carte (1) utilisée dans la présente invention. Par exemple, lorsqu'une autorisation de paiement est requise, cette dernière est obtenue en général directement auprès de l'établissement émetteur (la banque de l'utilisateur de la carte). La présente invention permet de mettre en oeuvre des services d'autorisation par au moins un serveur (5) de l'établissement émetteur comme connu dans le domaine bancaire. Le serveur acquéreur (4) est alors agencé pour contacter au moins un serveur émetteur (5) pour en obtenir des données, par exemple représentatives d'une autorisation de la transaction.

Il est connu dans l'art antérieur diverses solutions pour réaliser des transactions sécurisées via au moins un réseau de communication, comme par exemple sur internet (par connexion filaire ou sans fil ou par un réseau de téléphonie mobile, etc.), utilisant généralement des certificats, tels que ceux des protocoles SSL/TLS. Il est connu également des solutions consistant à créer un canal sécurisé (ou « tunnel » sécurisé), c'est-à-dire un canal de communication crypté, entre les 2 entités en relation lors de la transaction, reposant sur l'utilisation de certificats tels que ceux des protocoles SSL/TLS. La présente invention tire en partie avantage de ces technologies connues pour les transactions via un réseau, qui sont citées ici à titre d'exemples illustratifs, mais nullement limitatifs.

L'invention prévoit de permettre la mise en oeuvre, dans certains modes de réalisation, d'autres serveurs. Par exemple, il est prévu dans certains modes de réalisation, au moins un serveur de certificat (9) pour la gestion des certificats de sécurité (par exemple de type SSL, notamment v3) utilisés dans les communications du TPE (2) et/ou au moins un serveur de téléchargement (10) pour la gestion de téléchargements vers et/ou depuis le TPE (2), comme par exemple pour l'envoi de paramètres et/ou d'applications au TPE (2). Les téléchargements du TPE, par exemple d'applications et/ou de paramètres pourront dépendre notamment du système d'acceptation dans lequel il est déployé, du contrat passé entre l'accepteur et l'acquéreur qui est à la base des transactions (la base de la possibilité pour l'accepteur d'accepter des paiements sur ses TPE) et donc, des spécifications de l'acquéreur qui définit comment (grâce aux paramètres (P) fournis au serveur (3) de transaction) doivent se passer les transactions réalisées auprès de ses services et équipements (serveur (4) de l'acquéreur). D'autre part, certains modes de réalisation prévoient également une interface homme-machine (IHM) fournissant un accès des accepteurs à diverses fonctionnalités de la présente invention. Cette IHM pourra être fournie directement par le serveur (3) de transaction ou par au moins un autre serveur dédié. Grâce à cette IHM, les accepteurs peuvent configurer le serveur (3) pour leur propre système d'acceptation, en fonction de paramètres de leur système d'acceptation et grâce aux paramètres (P) de l'acquéreur (par exemple fourni par l'équipement acquéreur (4), par téléparamétrage, lors d'une requête du serveur (3) de transaction, par exemple initiée via l'IHM). Grâce à cette IHM, les accepteurs peuvent également configurer leurs TPE (2) auprès du serveur (3) de transaction, mais également gérer et administrer l'ensemble de leur système d'acceptation, ainsi que leurs transactions (abouties ou non), qui pourront être stockées par exemple dans le serveur (3) de transaction. On notera que le serveur (3) de transaction pourra être configuré pour que son initialisation (sa configuration) pour un système d'acceptation donné soit accessible aux accepteurs via l'IHM ou devra être réalisée par les administrateurs du serveur (3) de transaction (l'entité concentrateur), par exemple pour éviter des problèmes liés à une mauvaise configuration ou à des accès intempestifs.

D'autre part, chez l'accepteur, l'invention prévoit de fournir également un module de routage (6) agencé pour organiser les communications avec le concentrateur et les équipements, notamment relatifs aux transactions (appelé « système d'acceptation » dans le domaine de la monétique), qui peuvent présents chez l'accepteur, comme par exemple des terminaux (7) tels que les caisses, les terminaux de transaction (2), les imprimantes (8) éventuellement séparées des terminaux (2), etc. Ce module de routage (6) est un module fonctionnel applicatif qui peut par exemple être hébergé en local ou bien dans une caisse chez l'accepteur. Les imprimantes (8) de l'accepteur (pour l'édition de tickets notamment) peuvent être des imprimantes en réseau, des imprimantes locales à une caisse ou des imprimantes locales au TPE, auxquelles ce module accède. Ce module de routage (6) permet par exemple d'adresser des impressions relatives aux transactions des divers TPE (2) de l'accepteur vers les diverses imprimantes (8), mais permet également, par exemple, d'adresser des montants des divers terminaux tels que des caisses (7) vers les divers TPE (2) de l'accepteur, bien qu'une caisse (7) soit en général associée à un TPE (2) par une configuration prédéterminée.

En France, les différents logiciels de transaction, en particulier pour les paiements, sont développés à partir de spécifications techniques présentées dans le Manuel du Paiement Electronique (MPE) établi par le Groupement des Cartes Bancaires CB. L'invention prévoit de respecter les spécifications techniques de ce MPE, et en particulier de la version 5.2.2 actuelle mais peut évoluer en fonction de l'évolution du MPE, notamment grâce à la communication entre le serveur de transaction (3) et le serveur acquéreur (4), comme décrit par exemple en référence aux fonctionnalités de téléparamétrage dans la présente demande. Ainsi, les acquéreurs fournissent un ensemble de paramètres (P) qui définissent les informations nécessaires pour réaliser les transactions telles que des paiements par carte bancaire par exemple. Ces informations peuvent inclure par exemple des informations relatives au porteur de la carte (pour l'identifier, par exemple grâce à un code PIN), des cryptogrammes à fournir par la carte, des applications à utiliser (dans la carte ou même dans le TPE éventuellement), des étapes à mettre en oeuvre (envoi de requêtes et de réponses), etc. Chaque acquéreur peut fournir son propre ensemble de paramètres (P), notamment en fonction de l'accepteur (par exemple en fonction du contrat souscrit par ce dernier) et l'invention permet de se conformer aux paramètres (P) de plusieurs acquéreurs.

Le réseau (RC) de communication utilisé pour les transactions de la présente invention peut être de divers types. Par exemple, ce réseau pourra être de type Internet et comporter des réseaux locaux au sein des équipements d'une entité donné, des accès VPN, etc. Dans diverses variantes, l'invention pourra mettre en oeuvre plusieurs réseaux. De plus, les réseaux mis en jeu pourront être de divers types, comme par exemple un réseau de téléphonie classiquement utilisé (ligne analogique ou numérique), mais éventuellement un réseau de téléphonie mobile (comme par exemple les réseaux de troisième génération) permettant une communication à haut débit avec des terminaux tels que, par exemple, des téléphones mobiles ou des ordinateurs munis de moyens de communication adaptés, etc. Plus classiquement, il pourra s'agir d'un réseau de type Internet, par exemple filaire.

Il est connu, par exemple dans le domaine bancaire, que les transactions, par exemple pour les paiements par carte bancaire chez un accepteur (par exemple un commerçant), mettent en oeuvre au moins un (4) acquéreur auprès duquel l'accepteur a passé un contrat pour réaliser les transactions et que les étapes nécessaires à ces dernières sont définies par l'acquéreur, généralement d'après des standard reconnus. La présente invention prévoit donc de se conformer aux spécifications des acquéreurs en utilisant les paramètres (P) qu'ils établissent pour définir notamment les informations requises, comme par exemple les étapes qui doivent être mise en oeuvre, pour qu'une transaction puisse être réalisée auprès d'eux. Il n'est donc pas nécessaire de détailler ces paramètres (P) dans la présente demande mais on cite dans la présente demande à titre d'exemples illustratifs et non limitatifs les étapes mises en oeuvre et, de façon plus particulière à la présente invention, les messages permettant de se conformer aux étapes requises par ces paramètres dans l'exemple d'une transaction bancaire telle qu'un paiement par carte bancaire d'un porteur (détenteur de la carte) chez un accepteur (par exemple un commerçant). De même, aucun détail ne sera donné ici sur les commandes permettant au terminal de transaction d'échanger des données avec une carte car la présente invention peut utiliser tout type d'interface connue, dite de niveau 1, permettant l'échange de données entre un lecteur de carte (ici désigné par le terme « terminal ») et la carte, par exemple quel que soit le standard des commandes APDU mis en oeuvre. On citera donc seulement quelques exemples illustratifs et non limitatifs de commandes APDU mises en oeuvre par le TPE (2) pour répondre à des instructions qui lui sont fournies par le serveur (3) de transaction.

De même, il n'est pas nécessaire ici de détailler les dispositifs de l'acquéreur (4) qui pourra comporter par exemple un premier serveur, dit frontal, auquel les utilisateurs se connectent pour réaliser des transactions, et un second serveur, dit serveur d'opérations, gérant les transactions. L'homme de métier comprendra donc que l'équipement de l'acquéreur (4) pourra comporter au moins un serveur (par exemple un seul serveur remplissant les fonctions du serveur frontal et du serveur d'opérations), avec par exemple une « enceinte cryptographique », par exemple de type HSM, pour réaliser les opérations de cryptage/décryptage d'après les résultats des traitements réalisés par la carte (1) et transmis par le TPE (2), via le serveur (3) de transaction.

La présente invention fait intervenir des « moyens de traitement de données » dans divers dispositifs (serveur, terminal, carte, etc.). L'homme de métier comprendra à la lecture de la présente demande que de tels moyens de traitement de données concernent, pour la carte sécurisée, la puce qui comporte au moins un microprocesseur permettant le traitement de données. De plus, la puce permet de stocker divers types de données telles que celles représentatives d'informations liées à la carte, mais également de données permettant l'exécution d'application(s) spécifique(s) (pour la signature des transactions notamment). D'autre part, l'homme de métier comprendra que, pour les serveurs, et les terminaux, de tels moyens pourront comporter également au moins un microprocesseur, par exemple monté sur une carte mère. D'une manière générale, les moyens de traitement de données peuvent comporter au moins un circuit électronique et/ou au moins un processeur. En fonction des ressources informatiques nécessaires, diverses variantes à la portée de l'homme de métier sont possibles. En ce qui concerne le terminal (TPE), les ressources de calcul peuvent être limitées grâce à la présente invention qui permet de minimiser les fonctionnalités à implémenter dans le TPE. On peut parler ainsi de TPE « léger » car il pourra n'intégrer que des moyens (20) d'échange de données avec la carte (par exemple pour la reconnaissance, la lecture et la validation de la carte présentée par le porteur) et des ressources ou des moyens (21) de traitement de données pour exécuter une application (210) lui permettant d'être contrôlé par le serveur selon l'invention, comme détaillé ci-après. Ces moyens (20) d'échange de données avec la carte correspondent aux fonctions de « niveau 1 » (par exemple « EMV level1 » dans le cas des cartes bancaires par exemple) classiquement rencontrés dans les TPE, alors que l'application (210) exécutée sur les moyens (21) de traitement correspond à une partie qui se situe au « niveau 2 » (par exemple « EMV level2 » dans le cas des cartes bancaires par exemple) des moyens classiquement rencontrés dans les TPE, mais qui est spécifique de la présente invention. L'invention permet donc de limiter les ressources nécessaires dans le TPE pour ce qui concerne le niveau 2 car le TPE nécessite une application allégée qui agencée pour obéir à des instructions du serveur qui remplit, en outre, les fonctions normalement implémentées dans les TPE.

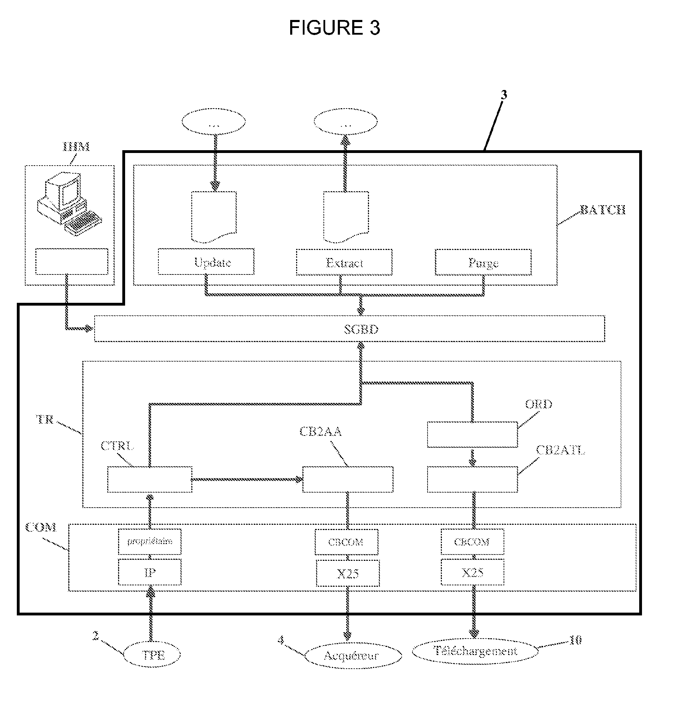

D'autre part, il est possible par exemple que plusieurs serveurs coopèrent pour effectuer les tâches requises au sein du système auxquels ils appartiennent et l'invention ne devra pas être limitée à la présence d'un seul serveur par exemple. De plus, l'invention met en oeuvre, dans divers modes de réalisation, des applications exécutées sur des serveurs et la façon dont ces applications sont mises en oeuvre doit être entendu comme n'étant pas limité à leur exécution sur un seul dispositif puisque les moyens de traitement peuvent être distribués au sein de plusieurs dispositifs. Ainsi, les applications décrites ici pourront également provenir de sources disparates et c'est une interprétation fonctionnelle qu'il conviendra d'appliquer puisque ce sont les fonctions décrites ici qui importent, (avec les avantages fournis par l'implémentation décrite ici). Enfin, aucun de détail ne sera donné ici sur le stockage des données dans les divers dispositifs décrits car l'homme de métier comprendra à la lecture de la présente description que les divers dispositifs pourront stocker divers types de données utilisées dans la présente invention et que les moyens de mémorisation utilisés pourront être de divers types. Par exemple, la figure 3 représente des moyens de stockage de masse pour le serveur de transaction (3) tels que des baies de stockage dans un réseau de type SAN (« Storage Area Network », selon la terminologie anglo-saxonne) et il apparaitra à l'homme de métier que les serveurs peuvent accéder ou comporter divers types de moyens de stockage de données en fonction des besoins.

On notera que la carte (1) est dite « d'un porteur » et qu'il est connu dans le domaine qu'elles appartiennent exclusivement à un utilisateur. Néanmoins, il est connu également des cartes sécurisées, par exemple de type EMV, ayant plusieurs titulaires et cette désignation ne doit donc pas être interprétée de façon limitative mais comme suggérant qu'elle permet l'identification (parfaitement fiable dans certains cas) de l'utilisateur qui en fait l'usage comme un utilisateur autorisé (par la vérification du code PIN en particulier). Les cartes (1) sécurisées sont connues de l'art antérieur et permettent de signer des transactions, notamment une fois l'authentification de leur utilisateur réalisée, par validation d'un code d'identification personnel valide (code PIN, pour «Personal Identification Number, selon la terminologie anglo-saxonne). Aucun détail ne sera donc donné sur le fonctionnement de ces cartes au-delà des étapes les plus spécifiques à la mise en oeuvre de la présente invention, dans les exemples illustratifs et non limitatifs d'étapes requises par les paramètres (P) d'un acquéreur définissant un paiement par carte bancaire.

On notera que les divers modes de réalisations décrits dans la présente demande peuvent être combinés entre eux à moins que l'inverse ne soit explicitement mentionné, ou qu'ils ne soient incompatibles entre eux et/ou que leur combinaison ne fonctionne pas, que ce soit pour le système, le TPE, le serveur ou le procédé. Ainsi, une caractéristique donnée qui est détaillée dans un mode de réalisation dans la présente demande pourra être isolée des autres caractéristiques de ce mode de réalisation et/ou combinée avec d'autres caractéristiques de n'importe quel mode de réalisation décrit, à moins que l'inverse ne soit explicitement mentionné ou qu'il apparaisse que les caractéristiques sont incompatibles ou que leur combinaison ne fonctionne pas.

Le serveur (3) de transaction selon l'invention est destiné à permettre de réaliser une transaction, via au moins un réseau de communication (RC), entre un porteur d'une carte (1) lue par un terminal (2) de transaction et au moins un serveur (4) d'au moins un acquéreur fournissant des paramètres (P) définissant des informations nécessaires à la transaction. Comme mentionné dans la présente description et comme détaillé ci-après, les acquéreurs peuvent définir une pluralité d'étapes pour une transaction donnée et définir divers types de transaction. De telles étapes peuvent être définies dans le MPE et conditionner le fonctionnement du serveur (3). Le serveur (3) de transaction comporte des moyens (31) de traitement de données et des moyens de communication (32) avec ledit terminal (2) et ledit serveur acquéreur (4), via ledit réseau (RC). Il est connu divers types de moyens de communication dans le domaine et aucun détail n'est nécessaire ici. Le terminal (2) de transaction (ou TPE) comporte des moyens (20) d'échange de données avec au moins une carte, des moyens de communication (22) via ledit réseau (RC) et des moyens (21) de traitement de données. Les moyens de traitement (31) du serveur (3) exécutent au moins une application (310) de transaction configurée d'après lesdits paramètres (P) (par exemple à l'aide d'un télé-paramétrage ou d'une configuration préalable par des gestionnaires/administrateurs de ce serveur, appelés ici « concentrateur »). Cette application de transaction (310) est agencée pour contrôler ledit terminal (2) en coopérant, au travers dudit réseau, avec au moins une application (210) exécutée sur lesdits moyens de traitement (21) du terminal (2), par l'intermédiaire d'au moins un message transmis audit terminal (2). Ainsi, le serveur de transaction peut envoyer une succession de messages pour suivre des étapes de transaction requises par les paramètres (P) définis par les acquéreurs. Ces messages envoyés au terminal peuvent permettre d'obtenir des données représentatives d'informations nécessaires à la transaction qui sont définies par les paramètres (P). Les messages sont générés d'après lesdits paramètres (P) et comprennent chacun des données représentatives d'au moins une instruction à traiter par le terminal (seul ou en relation avec la carte). L'instruction est formatée par ladite application de transaction (310), pour définir au moins une action et/ou au moins un échange de données avec la carte à réaliser par le terminal (2). Ainsi, un message donné peut comporter une instruction définissant une action à exécuter par le terminal, comme par exemple un affichage d'un message d'erreur, une communication avec un autre serveur (par exemple un serveur (9) de certificat ou autre), etc. De même, un message donné peut comporter une instruction définissant une action à réaliser grâce à l'intervention du porteur de la carte ou de l'accepteur sur les moyens d'interaction du TPE (2), comme par exemple une invitation à la saisie sur le TPE, puis une utilisation de la saisie par le TPE (2). De plus, un message donné peut comporter une instruction définissant un échange de données à réaliser avec la carte (1). Le TPE (2) peut alors traiter l'instruction grâce à ses moyens (20) d'échange de données en envoyant au moins une commande APDU à la carte, pour obtenir par exemple des données requises dans l'instruction reçue du serveur (3). L'application (210) du TPE (2) est agencée pour fournir audit serveur (3) un message de réponse comprenant des données représentatives du résultat du traitement de ladite instruction. Ainsi, lorsque le TPE traite l'instruction (soit seul soit en relation avec la carte), il peut ensuite renvoyer au serveur les données représentatives du traitement. L'application de transaction (310) du serveur (3) est également agencée pour utiliser les résultats reçus du terminal (2) pour collecter et fournir au serveur acquéreur (4) lesdites informations nécessaires à la transaction. Ainsi, le serveur (3) qui reçoit la réponse du TPE contenant le résultat du traitement peut réaliser le traitement nécessaire pour accomplir l'étape requise par les paramètres (P) de l'acquéreur, par exemple en fournissant au serveur acquéreur (4) la réponse obtenue (par exemple un cryptogramme que le TPE aura obtenu de la carte (1) et transmis au serveur (3) de transaction). Des exemples illustratifs de messages et de traitement sont détaillés dans la présente demande, pour montrer des cas pratiques d'étapes et de messages utilisés pour réaliser une transaction tel qu'un paiement par carte bancaire. Ainsi, le serveur de transaction (3) peut fournir au serveur acquéreur (4) en une seule transmission ou en plusieurs fois (selon les paramètres définis par l'acquéreur) les informations nécessaires à la transaction, notamment celles obtenues grâce à la carte (1) du porteur. On comprend de ce qui précède que le serveur permet en fait de déporter les fonctions normalement implémentées dans le TPE au niveau d'une application dans le serveur et donc d'alléger le TPE qui ne nécessite plus qu'une application complémentaire de celle du serveur (en plus des moyens d'échange de données avec la carte), au lieu d'implémenter toutes les fonctionnalités requises par les transactions. De plus, on comprend que les paramètres (P) sont fournis ici par au moins un acquéreur. Ainsi, le serveur (3) est capable de réaliser des transactions selon une pluralité d'ensembles de paramètres définis par divers acquéreurs. Comme expliqué précédemment, dans le domaine des paiements par carte bancaire, les paramètres sont déterminés pour chaque acquéreur et pour chaque accepteur. On comprend que la présente invention permet de faciliter la gestion des contrats et des paramètres requis pour les transactions avec de multiples accepteurs et de multiples acquéreurs. On comprend également que cet agencement permet de faire reposer les transactions sur les mécanismes de sécurité utilisés dans les transactions par carte, comme par exemple les calculs de cryptogramme par les puces des cartes EMV. En effet, les messages transmis entre le serveur (3) de transaction et le TPE (2) permettent à ce dernier d'interroger la carte (1) et d'en obtenir des traitements, comme par exemple un cryptogramme calculé par la carte (par exemple suite à une sélection d'une application cryptographique).

Le terminal (2) de transaction selon l'invention est destiné à permettre de réaliser une transaction via au moins un réseau de communication (RC), entre un porteur d'une carte (1) lue par ledit terminal (2) et au moins un serveur (4) d'au moins un acquéreur fournissant des paramètres (P) définissant des informations nécessaires à la transaction. Comme mentionné ci-dessus, ledit terminal (2) comporte des moyens (20) d'échange de données avec au moins une carte (1), des moyens de communication (22) via ledit réseau (RC) et des moyens (21) de traitement de données. Les moyens de communication (22) du terminal (2) sont agencés pour communiquer avec au moins un serveur (3) de transaction selon l'invention. Ce serveur, comme mentionné ci-dessus comporte des moyens de communication (32) avec ledit terminal (2) et ledit serveur acquéreur (4), via ledit réseau (RC), et des moyens (31) de traitement de données exécutant au moins une application (310) de transaction configurée d'après lesdits paramètres (P). Les moyens de traitement (21) du terminal (2) exécutent une application (210) agencée pour permettre le contrôle du terminal (2) par ladite application (310) de transaction du serveur (3) en coopérant avec cette dernière, au travers dudit réseau (RC), par l'intermédiaire d'au moins un message transmis audit terminal (2). Chaque message est généré par ladite application (310) du serveur (3), d'après lesdits paramètres (P). Les messages comprennent des données représentatives d'au moins une instruction à traiter, pour définir au moins une action et/ou au moins un échange de données avec la carte à réaliser par le terminal (2), comme indiqué ci-dessus. L'application (210) du terminal est agencée pour traiter ladite instruction et fournir audit serveur (3) un message de réponse comprenant des données représentatives du résultat du traitement de ladite instruction, de manière à ce que ladite application (310) du serveur (3) puisse utiliser les résultats qui lui sont envoyés pour collecter et fournir auserveur acquéreur (4) lesdites informations nécessaires à la transaction. Les messages transmis entre le serveur (3) et le TPE (2) pourront, dans certains modes de réalisation, être formatés selon un protocole spécifique comprenant des objets, tels que champs et des valeurs, représentatifs d'instructions et contenant des informations relatives à des commandes à exécuter par le TPE. Par exemple, le protocole utilisé pourra reposer sur des instructions qui réfèrent notamment à des commandes APDU à transmettre par le TPE (2) à la carte (1).

Dans certains modes de réalisation particulièrement avantageux en terme de rapidité des transactions, les instructions de chaque message envoyé par le serveur (3) sont agencées pour que l'application (210) du terminal (2) détermine une pluralité de commandes APDU correspondant auxdits échanges de données avec la carte et effectue ces échanges via lesdits moyens (20) d'échange de données. Ainsi, le serveur limite le nombre de messages à envoyer pour réaliser les transactions en intégrant dans un message au moins une instruction qui regroupe une pluralité d'actions et/ou d'échanges à effectuer par le TPE (2). L'application (210) du TPE (2) est agencée pour contrôler la succession de commandes effectuées par lesdits moyens (20) d'échange de données, pour recueillir les données fournies par la carte (1) et formater en conséquence le message de réponse à destination dudit serveur (3). Les échanges entre une carte (1) et un TPE sont connus pour être généralement relativement lents. De plus, la communication entre le TPE et la banque passe, de façon connue en soi, par divers types de moyens de communication du TPE dont la rapidité varie (comme par exemple via une ligne analogique ou un réseau de téléphonie mobile ou un réseau de type internet). Il résulte de ces deux types de communications mises en oeuvre (carte-lecteur et lecteur-acquéreur) au cours des transactions que ces dernières paraissent souvent longues aux utilisateurs (accepteurs et porteurs). Ce problème est résolu dans la présente invention par le fait que le terminal réalise une pluralité d'échanges et formate une réponse en fonction du résultat, au lieu d'être complètement contrôlé par le serveur pour réaliser chaque échange de données avec la carte. Ainsi, au lieu que chaque message du serveur n'induise qu'une commande APDU dont la réponse doit être attendue puis transmise au serveur, l'application (310) du serveur et l'application (210) du terminal (2) permettent de grouper les commandes par étapes fonctionnelles (par exemple définies par les acquéreurs dans les paramètres (P) fournis) et de ne pas limiter les communications entre le serveur (3) et le terminal (2) à la lenteur des communications entre le terminal (2) et la carte (1). Certaines étapes de transaction définies par les acquéreurs nécessitent une pluralité d'échanges entre le TPE et la carte et on comprend que les applications (310, 210) du serveur (3) et du TPE (2) permettent de regrouper cette pluralité d'échanges dans les messages utilisés.

L'application (210) du terminal (2) est agencée pour analyser le message et l'instruction du serveur (3) de transaction et éventuellement contrôler l'instruction par rapport à des données déjà obtenues auprès de la carte (1). L'application (210) du TPE (2) peut donc extraire des champs dans le message et d'éventuelles valeurs attribuées aux champs pour déterminer au moins une instruction. A ce stade, l'application (210) peut, le cas échéant (si nécessaire en fonction des données du message), contrôler si l'instruction nécessite des données déjà lues, notamment dans la carte (1), et déjà analysées. Si nécessaire, l'application (210) du TPE peut alors utiliser ces données pour effectuer le traitement. Ensuite, l'application (210) du TPE (2) peut, grâce à cette analyse et cet éventuel contrôle, déterminer au moins une action à effectuer et/ou au moins un échange de données à effectuer avec la carte (1) pour répondre à l'instruction. Dans le cas où l'instruction nécessite de réaliser plusieurs actions et/ou échanges de données avec la carte (1), l'application est capable de déterminer la succession d'actions et/ou d'échanges à réaliser. Ainsi, par exemple, le TPE réalisera plusieurs échanges successifs avec la carte (1) pour obtenir les données requises dans l'instruction. L'application est donc agencée pour exécuter l'action et/ou l'échange (ou la pluralité d'actions et/ou d'échanges), le cas échéant selon au moins un traitement effectué par la carte au fur et à mesure des échanges, éventuellement en fonction d'actions requises du porteur de la carte (1). Ainsi, le traitement du TPE (2) dépend de façon dynamique des réponses de la carte (1) et de l'analyse des données reçues de la carte (1) au fur et à mesure des échanges avec la carte. Si les actions et/ou les échanges requièrent l'intervention du porteur, par exemple par la saisie d'un code sur les moyens d'interaction du TPE, les données qui en résultent sont alors utilisées par le TPE pour le traitement de l'instruction. Une fois la succession d'actions et/ou échanges réalisée, l'application (210) du TPE (2) analyse le(s) résultat(s), puis génère et transmet au serveur (3) de transaction un message de réponse intégrant le(s) résultat(s). L'application réalise donc une analyse finale des résultats de traitement et envoie la réponse avec les données représentatives du(ou des) résultat(s) au serveur. Lors de cette analyse finale, l'application (210) collecte, le cas échéant, les données retournées par la carte (1) lors de la pluralité d'échanges successifs, les regroupe et les formate dans un message à destination du serveur (3).

Dans certains modes de réalisation, le serveur de transaction (3) est agencé pour obtenir lesdits paramètres (P) de l'acquéreur par téléparamétrage via ledit réseau (RC) en contactant ledit serveur acquéreur (4). Par exemple, le serveur de transaction (3) peut fournir au serveur acquéreur (4) les paramètres relatifs à l'accepteur ou simplement des données permettant d'identifier l'accepteur (les paramètres de l'accepteur étant déjà connus de l'acquéreur). Le serveur acquéreur (4) est agencé pour fournir en retour les paramètres (P) permettant au serveur de transaction (3) d'initialiser et d'activer l'application (310) de transaction.

Dans certains modes de réalisation, le serveur est agencé pour reconnaître le TPE (2) lorsque ce dernier s'y connecte pour la première fois, puis pour référencer et initialiser ce TPE pour permettre la réalisation des transactions futures. Des exemples d'initialisation sont fournis dans la présente description.

Dans certains modes de réalisation, le télé-paramétrage du serveur de transaction (3) et/ou le référencement et l'initialisation du terminal (2) est(ou sont) initié(s) par l'accepteur au travers d'une interface homme machine (IHM) accessible via ledit réseau (RC).

Dans certains modes de réalisation, le TPE communique également avec un module de routage (6) agencé pour organiser les échanges de données entre le terminal (2) et au moins un dispositif (7, 8) de l'accepteur. Un tel dispositif peut être une caisse (7) de l'accepteur et/ou au moins une imprimante (8) de l'accepteur, comme décrit précédemment..

On comprend donc que l'invention permet de proposer une offre de services à des accepteurs pour leur simplifier la gestion et la maintenance de leurs solutions d'acceptation. On notera que l'invention remplit les conditions pour être éligible à des certifications, notamment de sécurité, telles que la certification PCI DSS (« Payment Card Industry - Data Security Standard », selon la terminologie anglo-saxonne) dans le domaine bancaire par exemple.

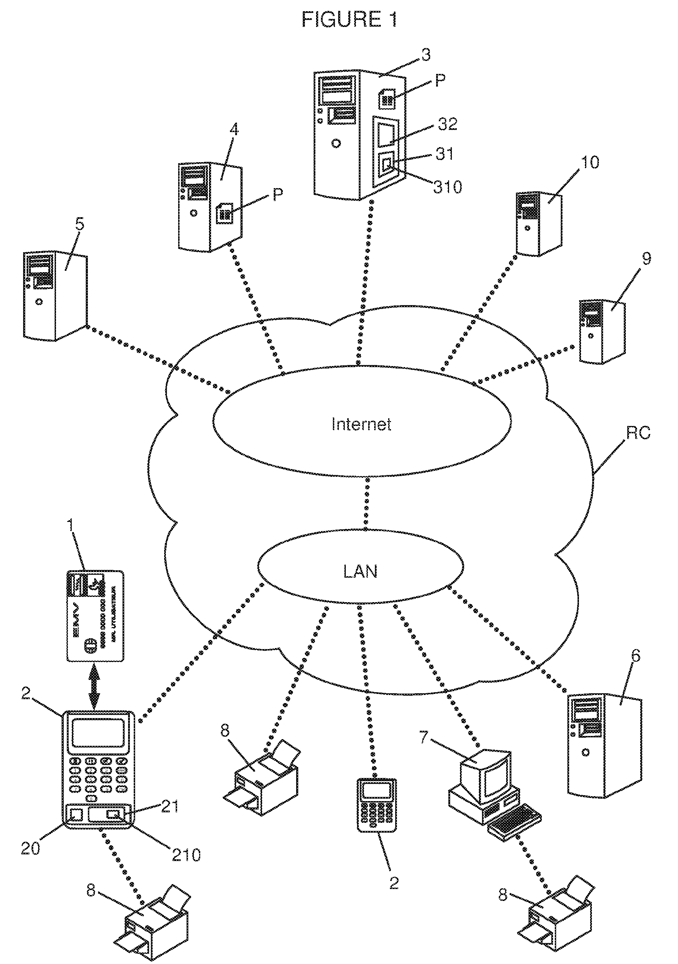

Certains modes de réalisation de l'invention vont être décrits en référence aux figures 1, 2 et 3 détaillant des exemples d'architecture d'un système, comprenant au moins un TPE (2) (ou terminal de transaction) et un serveur (3) de transaction. Ces modes de réalisation illustratifs intègrent les divers équipements qui peuvent intervenir dans l'invention, mais on comprendra à la lecture de la présente demande que tous ces équipements ne sont pas forcément nécessaires pour la mise en oeuvre de l'invention et que seuls un TPE (2), un serveur (3) de transaction et une carte (1) sont nécessaires pour transmettre à l'acquéreur les informations requises. De même, pour chaque équipement, que ce soit le serveur (3) de transaction, le TPE (2), le serveur (4) acquéreur ou autres, les détails d'architecture donnés ci-après sont des exemples illustratifs qui fournissent des avantages mais qui ne doivent pas être interprétés comme étant nécessairement présents dans l'architecture de l'invention.

La figure 1 représente un système avec un serveur de transaction (3) selon l'invention qui communique avec un serveur acquéreur (4) et un TPE (2) selon l'invention pouvant échanger des données une carte (1), pour réaliser des transactions. Dans cet exemple de la figure 1, le réseau (RC) est représenté comme un réseau de type Internet et, au niveau de l'accepteur, comme un réseau local (LAN) par lequel les dispositifs de l'accepteur sont reliés. Dans cet exemple, un module de routage (6) (représenté comme un serveur dans cet exemple) assure les adressages de données chez l'accepteur. Dans certains modes de réalisation, un tel module (6) n'est pas présent et le TPE communique directement avec le serveur (3) via le réseau (RC). La figure 1 représente un TPE connecté directement à une imprimante (8) et un TPE relié aux caisses (7) et imprimantes (8) par le réseau. Dans certains cas, notamment en l'absence de module de routage (6), des TPE (2) pourront comporter des moyens d'impression comme connu dans le domaine. Cette figure 1 représente une carte (1) par l'exemple illustratif d'une carte EMV comprenant une puce. Un serveur (5) d'un établissement émetteur est également représenté sur cette figure comme communiquant via le réseau (RC), notamment pour que le serveur acquéreur (4) puisse en requérir une autorisation par exemple. Un serveur de certification (9) et un serveur de téléchargement (10) sont également représentés sur cette figure 1 comme communiquant via le réseau (RC).

Le serveur (3) de transaction comporte une application (310) (logiciel exécutable) permettant de réaliser les transactions. Dans certains modes de réalisation, cette application (310) met en oeuvre les fonctionnalités et services du MPE 5.2 (cahier de spécifications de paiement de proximité CB), lorsqu'il est en relation avec un TPE (2).

Le serveur (3) utilise les paramètres (P) propres à chaque contrat accepteur/acquéreur. Dans certains modes de réalisation, il reçoit ces paramètres d'au moins un acquéreur. De fait, le serveur (3) peut être multi-applications car il assure les transactions multi-enseignes et multi-accepteurs. Ainsi, il permet d'utiliser divers types d'applications de transaction pour se conformer aux exigences des transactions pour lesquelles il est utilisé. Le serveur (3) permet donc, par exemple, grâce une pluralité d'ensembles de paramètres (P) différents définis chacun par un acquéreur donné et/ou par une pluralité d'application (310) de transaction remplissant les fonctions décrites dans la présente demande, de fournir les services nécessaires pour réaliser des transactions auprès de ces acquéreurs, pour divers accepteurs (par exemple ceux passé un contrat avec ces acquéreurs et pour lesquels un certain nombre des paramètres (P) auront été établis). Dans certains modes de réalisation, le serveur (3) assure la confidentialité des applications des accepteurs car une application est dédiée à un contrat bancaire et à un seul.

Dans certains modes de réalisation, le serveur (3) sert d'interface avec les divers équipements de l'acquéreur (par exemple les centres bancaires comme le centre d'autorisation ou les centres de télécollecte et de téléparamétrage).

L'application (310) forme en fait un module intégré au serveur (3), qui peut prendre en charge la plupart des fonctionnalités de paiement liées au MPE 5.2 avec les TPE qui lui sont connectés.

Dans certains modes de réalisation, la consultation et la gestion des transactions par l'accepteur est accessible par une IHM de type web par exemple.

Dans certains modes de réalisation, le serveur (3) est basé sur une architecture à deux niveaux de type Client-Serveur, ce qui permet :
- Les échanges avec les TPE (2)
- Le traitement des transactions de paiement
- L'administration et la gestion globales et sélectives par client

Dans certains modes de réalisation, le serveur (3) est réparti en 4 blocs principaux, comme par exemple représenté sur la figure 3 :
- Le traitement transactionnel, pris en charge par un module de transaction (TR) au sein de l'application (310),
- Les échanges de communication, qui sont effectués par exemple par un module de communication (COM) au sein de l'application (310),
- Le traitement différé correspond à l'actualisation (update), la suppression (purge) et l'extraction (extract) de données, qui est assumé par exemple par un module de gestion (BATCH) au sein de l'application (310), via un système de gestion de base de données (SGDB) par exemple,
- Une interface Homme machine, par exemple de type Web, géré par exemple par un module d'interface (IHM) au sein de l'application (310).

On comprend donc que l'on regroupe ici toutes les fonctionnalités des modules sous « au moins une application (310) du serveur » mais que l'invention peut être implémentée avec une pluralité d'applications coopérant pour réaliser ces fonctions (comme par exemple une application pour chaque module).

Ainsi, dans une telle architecture fournie à titre d'exemple illustratif et non limitatif, on peut retrouver dans l'application (310) du serveur (3) un module de transaction (TR) comprenant, dans certains modes de réalisation :
- un module (CTRL) de contrôle (ou pilotage), gère les demandes d'autorisation de paiement à destination de l'interface CB2A autorisation demandeur du serveur (3),
- un module ordonnanceur (ORD) gérant la planification des ouvertures de dialogues de services de télécollecte et de téléparamétrage du serveur (3),
- au moins un module d'interface télétransmission (CB2A-TL) gérant la couche applicative du protocole CB2A de télécollecte/téléparamétrage du serveur (3),
- un module d'interface autorisation (CB2AA) gérant la couche applicative du protocole CB2A autorisation du serveur (3) et s'interfaçant avec le module (CTRL) de contrôle.

Dans certains modes de réalisation, on retrouve également dans l'application (310) du serveur (3) un module de sécurité gérant les protocoles de communication sécurisées, reposant par exemple sur une infrastructure de gestion de clés (PKI, pour l'anglais « Public Key Infrastructure », regroupant des composants physiques, des procédures humaines et des logiciels en vue de gérer le cycle de vie des certificats numériques).

Dans certains modes de réalisation, on retrouve également dans l'application (310) du serveur (3) un module de gestion permettant l'administration et l'exploitation du serveur (3) et permet également de consulter les journaux des transactions par exemple.

Les fonctions réalisées par l'application (310), notamment le module de transaction (TR) sont alors :
- Gestion des transactions de paiement de proximité en respect du MPE 5.2.2, par exemple par le module de contrôle (CTRL) des TPE,
- Gestion de la demande et de la réponse autorisation d'une transaction de paiement, par exemple par le module de contrôle (CTRL) qui émet une requête au d'interface autorisation pour obtenir l'autorisation auprès de l'acquéreur (couche applicative CB2A Autorisation),
- Gestion de la télécollecte par un ordonnanceur qui émet une requête au module d'interface télétransmission (CB2A-TL), couche applicative CB2A Télécollecte. L'ordonnanceur gère les télécollectes automatiques à partir des paramètres acquéreur de télécollecte de l'application concernée. Le module d'interface téléparamétrage (CB2A-TL) gère sur requête de l'ordonnanceur les ouvertures de dialogue avec la banque acquéreur,
- Gestion d'un téléparamétrage par l'ordonnanceur qui émet une requête au module d'interface télétransmission (CB2A-TL), couche applicative CB2A Téléparamétrage. L'ordonnanceur gère les téléparamétrages automatiques à partir des paramètres acquéreur de téléparamétrage de l'application concernée. Le module d'interface téléparamétrage (CB2A-TL) gère sur requête de l'ordonnanceur les ouvertures de dialogue avec la banque acquéreur.

Dans certains modes de réalisation, le cas particulier de la 1^{ère} initialisation peut être géré par exemple grâce une ouverture de service de télécollecte ou de téléparamétrage, initiée manuellement à partir de l'interface IHM de type web.

Dans certains modes de réalisation, le module de communication « COM » gère les flux bancaires à la demande d'un module du serveur (3), vers les entités extérieures suivantes :
- Le TPE (2), par exemple selon une communication IP : Les échanges de données sont formatés par exemple selon un protocole spécifique, par exemple grâce à un module spécifique de ce protocole.
- Le serveur (4) Acquéreur d'autorisation, par exemple en mode X25 : les échanges de données sont formatés par exemple au protocole CBCom par un module spécifique.
- Le serveur de téléchargement (10), par exemple un serveur Acquéreur de téléparamétrage et de télécollecte, par exemple en mode X25 : Les échanges de données sont formatés alors par exemple au protocole CBCom par un module spécifique.
- Le serveur de certificat (9), par exemple un serveur Concentrateur fournissant les certificats SLL v3 utilisés pour sécuriser les communications entre le serveur (3) de transaction et les TPE (2).

Dans certains modes de réalisation, les flux bancaires entre le serveur (3) et les serveurs acquéreur (4) sont respectivement :
- CBCOM V1.2, pour les accès en mode X25
- CB2A autorisation V1.1.2, pour les accès aux acquéreurs en mode X25
- CB2A TLC-TLP-GR V1.1.3, pour les accès aux acquéreurs en mode X25

Cependant, les spécifications dans ce domaine évoluent et l'invention ne devant pas être limitée aux exemples illustratifs fournis ici, elle doit encore moins l'être aux exemples de protocoles de communication fournis. Par exemple, les communications avec les serveurs acquéreurs sont actuellement en mode X25, mais ce mode va prochainement être supprimé. Le mode de liaison en IP avec les centres acquéreurs qui va être déployé en s'appuyant sur les spécifications rédigées par le Groupement des cartes Bancaires suivantes pourra donc être utilisé (cf. les spécifications fournies dans CB2A autorisation V1.1.2, CB2A TLC-TLP-GR V1.1.6 (implémentation du Bulletin 8) et CBCOM V1.3).

Dans certains modes de réalisation, l'IHM est une interface web qui permet aux accepteurs de gérer leur contrat commerçant, selon les droits d'administration qui leur ont été alloués par le concentrateur. Plusieurs niveaux de l'IHM peuvent être ont définis pour permettre par exemple :
- L'administration-gestion de la solution fournie par l'invention,
- L'exploitation de service de la solution fournie par l'invention,
- La maintenance de systèmes d'acceptation par l'accepteur,
- La consultation des données de paramétrage et de transaction par l'accepteur.

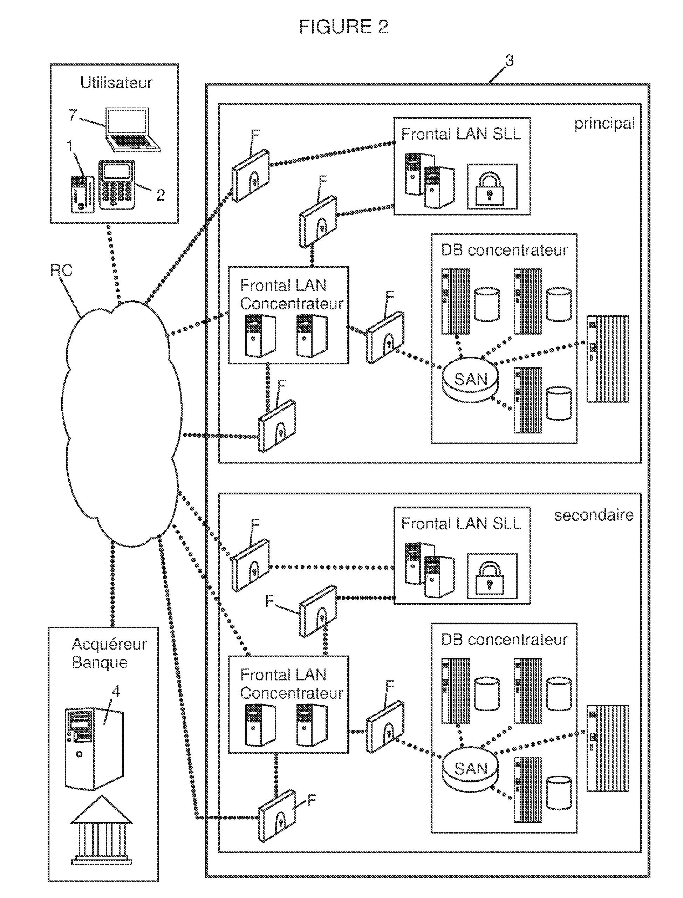

De plus, dans certains modes de réalisation, le concentrateur pourra en fait fournir une pluralité de serveurs pour que le serveur (3) de transaction décrit ici puisse réaliser les fonctions décrites en toute sécurité et/ou puisse rester accessible même en cas de forte demande. Ainsi, pour répondre aux besoins de sécurisation des données accepteur et permettre un taux de disponibilité élevé, certains modes de réalisation prévoient que le concentrateur fournisse un équipement ayant une architecture plus complexe qu'un seul serveur (3) de transaction, comme par exemple une architecture technique redondante sécurisée sur deux sites en mode Actif / Actif, comme représenté sur la figure 2. L'architecture est par exemple composée de 3 réseaux différents (VPN, X25 et Internet, non représentés), avec des éléments doublés dans chacun des réseaux pour garantir l'absence d'échec ou POF (« Point Of Failure», selon la terminologie anglo-saxonne) :
- Un réseau frontal SSL garantissant le chiffrement des informations de bout en bout entre le TPE (2) et l'équipement concentrateur (3). Ouverture d'un autre lien SSL entre la partie LAN (« Local Area Network », selon la terminologie anglo-saxonne) frontal SSL et la partie LAN concentrateur de TPE.
- Un réseau de frontal concentrateur, répondant aux sollicitations des TPE.
- Un réseau de base de données permettant de stocker l'intégralité des informations des accepteurs. La base de données peut être par exemple stockée sur des Baie de stockage de type SAN.

Le TPE (2) est la partie du système d'acceptation résidant chez l'accepteur qui permet la lecture de la carte (1) du porteur pour initialiser le traitement d'une transaction. Le TPE (2) peut être certifié PCI PED (« Payment Card Industry - PIN Entry Device », selon la terminologie anglo-saxonne) pour être conforme aux exigences du domaine des paiements bancaire.

Le TPE (2) est un terminal comportant un lecteur de carte à puce (à contact ou sans contact, comme par exemple un lecteur ISO 7816) et/ou un lecteur de carte à piste magnétique (par exemple de type ISO 1-3). Le TPE (2) assume les fonctions de niveau 1 classiquement retrouvées dans un TPE (par exemple les fonctions de type « EMV Level1 » selon la terminologie anglo-saxonne), qui couvrent les interfaces physiques électriques et de transport. D'autre part, le TPE (2) assume une partie des fonctions de niveau 2 d'un TPE (par exemple une partie des fonctions de type « EMV Level2 » selon la terminologie anglo-saxonne) mais pour communiquer avec le serveur (3) de transaction qui assume le reste des fonctions. Les fonctionnalités du TPE (2) sont donc restreintes grâce à l'utilisation du serveur (3) de transaction. Ces fonctionnalités comportent la reconnaissance, la lecture et la validation de la carte présentée par un porteur, ainsi que les échanges de messages avec le serveur (3) qui contrôle le reste des fonctionnalités nécessaires aux transactions. Les transactions sont réalisées conjointement avec le serveur (3), notamment le module de contrôle (CTRL) formé par l'application (310) de transaction. Dans certains modes de réalisation, de façon connue en soi, le TPE comporte des moyens d'interaction tels qu'un clavier et un écran ou un écran tactile par exemple. Par exemple, les TPE comportent souvent une unité centrale, un clavier sécurisé, deux lecteurs carte à puce et piste ainsi qu'un écran LCD et des ports de communications, un port série RS232 et un port Ethernet. Dans certains modes de réalisation, de façon connue en soi, le TPE (2) peut être intégré dans un dispositif plus important et/ou plus complexe, comme par exemple un automate.

Le TPE (2) peut être associé optionnellement à un module caisse (7), initialisant la transaction et transmettant au TPE (2) le montant et la monnaie ou devise qui permettront au TPE (2) d'effectuer la transaction. De même, les messages à destination de l'accepteur seront déportés sur l'afficheur de la caisse.

Dans certains modes de réalisation, pour permettre une bonne interopérabilité du TPE (2) avec les caisses présentes chez les commerçants, l'invention peut prévoir d'utiliser un protocole dérivé du protocole EURO/CAISSE 2001 défini par le consortium international connu sous le nom de « CONCERT ».

Dans certains modes de réalisation, le TPE (2) est équipé de moyens d'impression. Cependant, dans d'autres modes de réalisation, le TPE (2) ne permet pas d'imprimer les différents tickets demandés par le MPE 5.2. Une imprimante lui est alors reliée, soit en local soit en réseau (notamment grâce au module de routage (6) dans certains modes de réalisation). Pour répondre aux recommandations sécuritaires et pour éviter la circulation des données sensibles présentes sur le ticket commerçant (comme par exemple le numéro du porteur, la date de fin de validité de la carte), lorsque TPE (2) est configuré avec une imprimante réseau, il pourra n'imprimer que des tickets du porteur même lorsque l'impression exige un ticket commerçant (par exemple dans le cas de porteurs étrangers et de gros montants). Dans ce cas, le porteur pourra par exemple signer deux tickets porteurs, le ticket commerçant pouvant être conservé sous forme électronique, par exemple un fichier, au niveau du serveur (3) de transaction.

Dans certains modes de réalisation, l'IHM du serveur (3) permet également d'accéder à une fonction d'impression des tickets.

Le fait que ce soit le serveur qui contrôle la mise en oeuvre des étapes nécessaires à la transaction facilite l'évolution de la présente invention en fonction des modifications des spécifications, notamment par les acquéreurs, car la mise à jour du serveur (3) est plus aisée qu'une mise à jour d'une multitude de TPE (2). Cette mie à jour du serveur (3) de transaction peut être réalisée, par exemple par les gestionnaires/administrateurs du serveur (entité concentrateur) soit en local, soit à distance par exemple via un VPN (« Virtual Private Network », selon la terminologie anglo-saxonne). La mise à jour des TPE (2) ne sera généralement plus nécessaire grâce à la présente invention car l'application du lecteur est prévue pour être suffisamment générale pour ne pas nécessiter une mise à jour en cas de nouvelle application (qui est alors uniquement implémentée côté serveur). Néanmoins, en vue d'optimiser la gestion du parc de TPE (2), un dispositif de mise à jour propriétaire des TPE (2) est possible, par exemple par TMS (« telecommunication management system », selon la terminologie anglo-saxonne). Par exemple, le serveur de téléchargement (10) pourra alors être utilisé pour permettre au serveur (3) de transaction d'initier cette mise à jour, par exemple en ordonnant aux TPE (2), par exemple à la fin d'une transaction, de se connecter au serveur de téléchargement.

Dans certains modes de réalisation, la sécurité des communications entre un TPE (2) et le serveur (3) est prévue afin d'éviter la fraude liée à la récupération des données bancaires sensibles par un tiers. Cette sécurité pourra être assurée par exemple grâce au protocole SSL V3. Pour garantir l'origine de l'appelant et de l'appelé, cette sécurisation peut être renforcée par une authentification mutuelle (double authentification) entre le serveur (3) et le TPE (2). Dans certains modes de réalisation, le serveur (3) de transaction comprend au moins un pare-feu (F) (ou « Firewall » selon la terminologie anglo-saxonne) pour protéger ses accès réseau.

Dans certains modes de réalisation, la sécurité des échanges entre l'IHM et le serveur (3) peut également être prévue, par exemple grâce à un serveur de type « reverse proxy » (selon la terminologie anglo-saxonne) positionné en amont de serveur web fournissant l'accès à la gestion par le serveur (3). Ce reverse proxy pourra prendre en charge la sécurisation des échanges véhiculés sur Internet, avec les accepteurs voulant accéder à leurs services. Cette sécurisation des échanges pourra être assurée avec le protocole SSL V3 également.

Dans certains modes de réalisation, tout TPE (2) qui se connecte au serveur (3) de transaction le fait par un tunnel crypté SSLV3. Une enceinte sécuritaire pourra être utilisée en vue d'administrer et de gérer la PKI de ces deux entités, grâce à l'infrastructure du concentrateur. La PKI pourra être basée sur un serveur de certification (9), qui répond aux exigences définies par des autorités telles que les STCA (« Secure Transactions Certification Authorities », selon la terminologie anglo-saxonne). Ces Autorités de Certification sont dédiées à la délivrance de certificats aux serveurs d'acquisition et aux infrastructures de gestion de clés de délégataires dans la filière des terminaux de paiement en mode IP. Ce serveur permet au serveur (3) de transaction d'identifier, d'authentifier et de vérifier l'habilitation d'un TPE (2), et de lui fournir les données de connexion nécessaires au serveur (3) de transaction (profil SSL, certificat racine, certificat client).

Dans certains modes de réalisation, la sécurité des communications dans le cas particulier de la 1ere installation d'un TPE (2) peut être avantageusement gérée grâce au fait que, en usine, chaque TPE (2) est préconfiguré avec un certificat dit « usine ». Lorsqu'un TPE (2) effectue sa première connexion auprès du serveur de certification (9), ce dernier lui transmet de façon dynamique les éléments de connexion qui lui seront nécessaires pour se connecter auprès du serveur (3) de transaction. Ces données pourront comporter par exemple:
- un certificat de l'autorité de certification,
- un certificat TPE (2) accepteur émis par l'autorité de certification,
- une clé privée TPE (2),
- des adresses et ports de connexion au serveur (3) de transaction.

De plus, l'invention permet de sécuriser les données financières car elles sont conservées uniquement côté serveur (dans une base de données comme par exemple les baies SAN de la figure 2). Cette fonctionnalité permet de garantir la sécurité des informations financières, grâce aux mesures de sécurité qui sont prises au niveau du serveur de transaction, comme par exemple le fait que le serveur soit sécurisé PCI-DSS (« Payment Card Industry Data Security Standard » selon la terminologie anglo-saxonne), mais aussi par la réplication de la base de données et des diverses sauvegardes réalisées, sur plusieurs exemplaires comme décrit dans la présente demande. Ainsi, même si le TPE tombe en panne, les transactions ne sont pas perdues comme dans les TPE de l'art antérieur et le commerçant n'a plus besoin de conserver à tout prix les tickets commerçants (tickets de confirmation des transactions).

Le protocole de communication avec le serveur (3) peut être un protocole spécifique (dit « propriétaire ») comme mentionné précédemment.

Les messages entre le TPE (2) et le serveur (3) de transaction sont donc formatés selon un protocole, par exemple spécifique (« propriétaire), pour comporter des champs correspondant par exemple à :
- des données représentatives d'informations liées au(x) serveur(s) de transaction (3),
- des données représentatives d'informations liées aux cartes (1) et/ou de commandes à transmettre aux cartes (1) pour obtenir ces informations,
- des données représentatives d'informations liées au(x) serveur(s) de certification (9) et/ou de messages à envoyer à ce(s) serveur(s) pour gérer la sécurité des communications avec le serveur de transaction,
- des données représentatives d'informations liées au(x) serveur(s) de téléchargement et de messages à envoyer à ce(s) serveur(s) pour la gestion du parc de lecteurs et/ou les mises à jour logicielles par ce(s) serveur(s).

Les messages transmis entre le TPE (2) et le serveur (3) de transaction pourront, par exemple dans le cas d'un paiement par carte bancaire, être des messages tels que les exemples illustratifs et non-limitatifs suivants :
- "beginInit" - Début d'initialisation du TPE, permettant au TPE (2) de se déclarer au serveur (3) de transaction afin qu'il puisse s'initialiser.
- "endInit" : Fin d'initialisation du TPE permettant au serveur (3) de transaction de valider l'initialisation du TPE (2). Suite à ce type de message (ou à d'autres messages), le TPE (2) pourra afficher des indications (dont la langue peut être définie selon l'accepteur au niveau du serveur (3) de transaction), par exemple du type BONJOUR (=Message d'accueil), MONTANT (= Affichage du montant dans la monnaie sélectionnée), INSEREZ CARTE (= Attente d'acquisition du moyen de paiement), CARTE MUETTE(=Carte à micro-circuit muette ou réponse incohérente à la RAZ), CARTE NON LUE (= Carte à piste mal lue), RETIREZ CARTE (= Données de la carte (piste ou puce) non acquises), PATIENTEZ (= Traitements internes en cours), ABANDON, CARTE BLOQUEE, CARTE ARRACHEE.

- "beginSes" : Début de session carte permettant au TPE (2) d'initier une session carte.
- "endSes" : Fin de session carte permettant au serveur (3) de transaction de clôturer une session carte.
- "QaidSel" - demande de sélection de l'AID permettant au serveur (3) de transaction de demander au TPE (2) de sélectionner l'application (AID) à utiliser. Le TPE (2) effectue alors les commandes cartes suivantes :
   - SELECT PSE "1 PAY.SYS.DDF01"
   - READ RECORD
   - SELECT AID

La sélection peut nécessiter un choix du porteur.
- "RaidSel" - résultat de la sélection de l'AID permettant au TPE (2) de fournir au serveur (3) de transaction la réponse à la sélection d'AID.
- "Qchoice" : demande de choix permettant au serveur (3) de transaction de demander au TPE (2) de sélectionner une valeur dans une liste de choix (par exemple de choisir le débit différé de recouvrement).
- "Rchoice" : résultat de la sélection du choix permettant au TPE (2) de fournir au serveur (3) de transaction la réponse à la sélection du choix.
- "QiccRead" : demande de lecture de l'application carte permettant au serveur (3) de transaction de demander au TPE (2) de lire les données de la carte.

Le TPE (2) effectue les commandes cartes suivantes :
- GET PROCESSING OPTION
- READ RECORD
- GET DATA
   - "RiccRead" - résultat de la lecture de l'application carte, permettant au TPE (2) de fournir au serveur (3) de transaction la réponse de la lecture des données de la carte.
   - "QiccAuth" : demande d'authentification carte/porteur permettant au serveur (3) de transaction de demander au TPE (2) d'authentifier la carte et le porteur.

Le TPE (2) effectue les commandes cartes suivantes :
- INTERNAL AUTHENTIFICATE
- GET CHALLENGE
- VERIFY PIN
   - "RiccAuth" - résultat de l'authentification carte/porteur permettant au TPE (2) de fournir au serveur (3) de transaction la réponse de l'authentification carte et/ou porteur.
   - "QcryptCalc" - demande de calcul du cryptogramme permettant au serveur (3) de transaction de demander au TPE (2) de calculer un cryptogramme.

Le TPE (2) effectue les commandes cartes suivantes :
- GENERATE AC
   - "RcryptCalc" : résultat du calcul du cryptogramme permettant au TPE (2) de fournir au serveur (3) de transaction le résultat du calcul du cryptogramme.
   - "QauthMan" : demande de gestion de l'autorisation permettant au serveur (3) de transaction de demander au TPE (2) de gérer l'autorisation en effectuant les actions suivantes :
      - Gestion du forçage accepteur après la demande d'autorisation (choix accepteur)
      - Gestion de l'appel phonie (saisie numéro d'autorisation par l'accepteur)
      - authentification de l'émetteur
      - Application des scripts émetteurs avant le calcul du cryptogramme final
      - calcul du cryptogramme final
      - Application des scripts émetteurs après le calcul du cryptogramme final

Le TPE (2) effectue les commandes cartes suivantes :
- EXTERNAL AUTHENTIFICATE
- script command
- GENERATE AC
- script command
   - "RauthMan" : résultat de la gestion de l'autorisation permettant au TPE (2) de fournir au serveur (3) de transaction le résultat de la gestion de l'autorisation.
   - "Qprint" : Demande d'impression de tickets permettant au serveur (3) de transaction de fournir les élements d'impression au TPE (2).
   - "Rprint" : Résultat de l'impression des tickets permettant au TPE (2) de donner au serveur (3) de transaction le résultat de l'impression.

En cas d'erreur lors de l'impression des tickets d'une transaction financière, le serveur (3) de transaction enregistre une transaction non aboutie.
- "Qinput" : Demande de saisie permettant au serveur (3) de transaction de demander au TPE (2) d'effectuer une saisie de données.
- "Rinput" : Résultat de la saisie permettant au TPE (2) de fournir au serveur (3) de transaction la réponse à la saisie de données.
- "Qmessage" : Demande d'affichage de message permettant au serveur (3) de transaction de demander au TPE (2) d'afficher un message particulier.
- "Rmessage" : Résultat de l'affichage permettant au TPE (2) de fournir au serveur (3) de transaction la réponse à la demande d'affichage de message.
- "beginRef" : Début de transfert des données de référence permettant au TPE (2) d'initier une session de transert des données de référence.
- "endRef" : Fin de transfert des données de référence permettant au serveur (3) de transaction de clôturer une session de transfert des données de référence.
- "QaccVal" - Demande de validation accepteur permettant au serveur (3) de transaction de demander au TPE (2) une validation accepteur.
- "RaccVal" - Résultat de la validation accepteur permettant au TPE (2) de fournir au serveur (3) de transaction la réponse à la demande de validation accepteur.

Divers modes de réalisation du procédé pourront donc comporter des étapes de transmission et de traitement d'au moins un de ces messages utilisés pour obtenir les informations requises par les acquéreurs selon le MPE 5.2 par exemple.

Les données relatives à la transaction pourront également être stockées par le serveur (3) dans des moyens de mémorisation (par exemple les baies de stockage SAN de la figure 2). Le serveur est ainsi capable de stocker les données relatives aux transactions et peut réaliser la télécollecte. Le serveur peut envoyer toutes les transactions à divers acquéreurs en fin de journée ou lorsque les transactions ton réalisées. De façon particulièrement avatageuse, par ce stockage et l'IHM, le serveur de transaction (3) peut fournir aux accepteurs des fonctions de gestion/administration de leurs transactions. Par exemple, l'IHM permet à un accepteur de télécharger l'ensemble des transactions réalisées sur ses TPE pendant une période déterminée, par exemple en relation avec un acquéreur donné. Cette fonctionnalité est particulièrement avantageuse pour l'accepteur qui possède alors un moyen de gestion bien plus efficace et pratique que les tickets imprimés par les TPE à collecter.

Dans certains modes de réalisation, lorsque les cartes (2) comportent plusieurs applications pour générer des cryptogrammes (ce qui permet d'augmenter le niveau de sécurité), le serveur (3) de transaction pourra envoyer un message au TPE avec une instruction spécifiant au moins une application de la carte à utiliser pour générer au moins un cryptogramme, grâce à au moins un identifiant d'application (AID, pour « Application IDentifier » selon la terminologie anglo-saxonne). II est connu que les cartes (1) sécurisées stockent parfois au moins une liste donnant un ordre de priorité à leurs applications. L'identifiant d'application permet que la carte n'utilise pas les applications selon cet ordre mais en fonction de ce qui lui est indiqué par le TPE (2) d'après l'instruction fournie par le serveur (3) de transaction. Le TPE (2) peut analyser et envoyer au moins une commande APDU pour faire sélectionner l'application identifiée à la carte (1).

D'une manière générale, le TPE (2) est agencé pour répondre à des instructions envoyées par le serveur (3) de transaction. Ces commandes pourront concerner, à titre d'exemples illustratifs et non limitatifs :
- une instruction d'initialisation d'une session avec la carte (1),
- une demande d'affichage d'informations envoyées par le serveur (3) de transaction, par exemple une invitation à la saisie (ou confirmation ou validation) par le porteur,
- une demande de signature de données,
- les demandes d'interrogation de la puce (commande APDU), par exemple reçues sous forme de message crypté, décryptés par le lecteur qui interroge la puce.

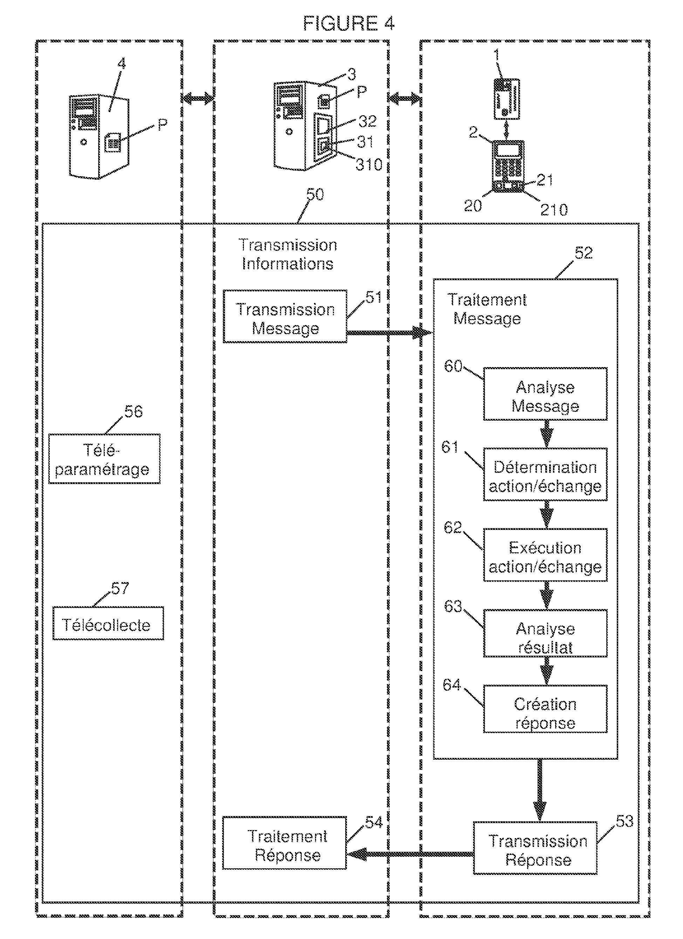

L'invention concerne également un procédé de transaction dont des étapes selon divers modes de réalisation sont représentées sur la figure 4. Ce procédé est mis en oeuvre par un système selon l'invention et pourra comporter au moins une étape de transmission (50) d'informations requises au moins un message entre le serveur (3) de transaction et le serveur acquéreur (4), pour fournir à ce dernier les informations nécessaires à une transaction. Dans le cas où les paramètres (P) fournis par l'acquéreur définissent plusieurs échanges de données, le procédé pourra comporter plusieurs itérations de cette étape de transmission (50) pour fournir les diverses informations selon la séquence requise. On comprend de la présente description et notamment des exemples de messages transmis entre le serveur (3) et le TPE (2) que le procédé selon l'invention peut comporter des étapes de transmission et de traitement de divers messages pour mettre en oeuvre des étapes nécessaires à une transaction, requises par les paramètres (P). On notera que le procédé pourra comporter plusieurs itérations successives des diverses étapes, notamment celles d'envoi de messages entre le serveur (3) de transaction et le terminal (2) ou celle d'utilisation (55), par le serveur (3), du résultat du traitement du TPE (2) et/ou de la carte (1).

Le procédé de transaction selon l'invention concerne donc au moins une transaction via au moins un réseau de communication (RC), entre un porteur d'une carte (1) lue par un terminal (2) de transaction et un serveur (4) d'au moins un acquéreur. Le terminal (2), dit TPE, comprend des moyens d'interaction avec le porteur, des moyens (20) d'échange de données avec au moins une carte (1), des moyens de communication (22) et des moyens (21) de traitement de données pour requérir la transaction. Le procédé est mis en oeuvre par une application (210) exécutée sur lesdits moyens de traitement (21) et coopérant avec une application (310) de transaction exécutée sur des moyens (31) de traitement de données d'un serveur (3) de transaction, grâce à des moyens de communication (32). Cette application de transaction (310) est configurée d'après des paramètres (P) qui sont fournis par ledit acquéreur et qui définissent des informations nécessaires à la transaction, obtenues par au moins une étape de transmission (50) entre le serveur (3) de transaction et le serveur (4) acquéreur, suite à au moins une itération des étapes suivantes :
- transmission (51) d'un message au terminal (2), par ladite application (310) de transaction, chaque message comprenant des données représentatives d'au moins une instruction à traiter par le terminal (2),
- traitement (52) de ladite instruction par l'application (210) du terminal (2), par au moins un échange de données avec la carte (1) et/ou au moins une action sur lesdits moyens d'interaction,
- transmission (53) d'un message de réponse comprenant des données représentatives du résultat du traitement de ladite instruction, par le terminal (2) au serveur (3),
- traitement (54) dudit message de réponse et utilisation du résultat par ladite application (310) du serveur (3) pour collecter lesdites informations.

Selon la transaction effectuée, selon divers modes de réalisation, une action à effectuer par le terminal pourra soit être une action à effectuer tout seul (comme par exemple un affichage, une connexion avec un serveur ou un terminal, etc.), soit une action grâce à l'intervention du porteur ou de l'accepteur sur les moyens d'interaction (comme par exemple une invitation à une saisie), comme mentionné précédemment. Les échanges de données avec la carte peuvent servir à obtenir des informations de la carte (comme par exemple une sélection d'application AID de la carte, par exemple pour générer un cryptogramme, etc.). Ces actions et/ou échanges de données permettent au TPE (2) d'obtenir les informations requises pour la transaction et de les transmettre au serveur de transaction (3) qui les collecte pour fournir au serveur acquéreur (4) toutes les informations nécessaires à la transaction qui sont définies par les paramètres (P).

Dans certains modes de réalisation avantageux, on notera que le serveur (3) de transaction, qui joue un rôle de « concentrateur de terminaux », peut gérer des listes de révocation de numéros de cartes de taille très importante et permet ainsi d'améliorer la sécurité apportée par cette liste.

Dans certains modes de réalisation, le procédé comporte au moins une étape de télé-paramétrage (56) du serveur (3) de transaction via ledit réseau (RC), pour obtenir lesdits paramètres (P) de l'acquéreur, en contactant le serveur acquéreur (4). Dans certains modes de réalisation, le serveur (3) de transaction fournit au serveur acquéreur (4) les paramètres relatifs à l'accepteur, et le serveur acquéreur (4) lui fournit en retour les paramètres (P) lui permettant d'initialiser et d'activer l'application (310) de transaction.

Dans certains modes de réalisation, le procédé comporte au moins une étape d'initialisation dudit terminal (2) grâce à une reconnaissance dudit terminal (2) par le serveur (3) de transaction lorsque ledit terminal (2) s'y connecte pour la première fois, puis un référencement et une initialisation dudit terminal (2) pour permettre la réalisation des transactions futures grâce à ladite application (210) du terminal (2).

Dans certains modes de réalisation, les étapes de télé-paramétrage du serveur de transaction (3) et/ou de d'initialisation du terminal (2) est(ou sont) initiée(s) par l'accepteur au travers d'une interface homme machine (IHM) accessible via ledit réseau (RC).

Un exemple de séquence de télé-paramétrage (ou de première initialisation de son système d'acceptation) est fournit ci-après :
- l'accepteur demande l'initialisation ou le télé-paramétrage de son système d'acceptation via l'IHM,
- le serveur de transaction (3) envoie une demande de téléparamétrage au serveur acquéreur (4),
- le serveur acquéreur (4) prend la demande en compte et requiert du serveur (3) de transaction l'envoi des paramètres du système d'acceptation,
- le serveur (3) de transaction envoie les paramètres du système d'acceptation au serveur acquéreur (4),
- le serveur acquéreur (4) prend les paramètres en compte pour établir ou retrouver les paramètres (P) de configuration,
- le serveur acquéreur (4) envoie les paramètres (P),
- le serveur (3) de transaction reçoit les paramètres (P) et initialise l'application de transaction (310).

Lors d'une première installation du TEP, l'accepteur (ou un installateur), paramètre le lecteur (paramètres réseau Ethernet, numéro de contrat de l'accepteur...). Ensuite, l'accepteur pourra lancer une connexion d'initialisation via les moyens d'interaction du TPE (2).

Un exemple de séquence d'initialisation d'un TPE par l'accepteur est fournit ci-après :
- l'accepteur demande l'initialisation du TPE sur le TPE directement,
- le TPE envoie une demande d'initialisation au serveur (3) de transaction,
- le serveur de transaction (3) reconnaît le TPE, le valide et retrouve les paramètres pour son initialisation. Le cas échéant, le serveur (3) de transaction peut alors fournir au TPE des paramètres de communication, des adresses de connexion au(x) serveur(s) de certification (9) et/ou de téléchargement (10), etc. Le serveur (3) de transaction envoie alors au TPE au moins des données lui confirmant son référencement et son initialisation dans le système,
- le TPE (2) reçoit la confirmation du serveur (3) de transaction lui permettant de fonctionner. Il peut alors par exemple afficher un message confirmant qu'il est prêt à être utilisé.

De même que pour le télé-paramétrage, le serveur (3) de transaction (grâce à l'IHM) permet de fournir les services de télécollecte proposés généralement par les équipements bancaires. Dans la présente invention, cette télécollecte sera mise en oeuvre à partir du serveur (3) de transaction, de façon automatique (configurée au préalable sur l'IHM) ou manuelle (collecte ponctuelle initiée lors d'une session utilisateur sur l'IHM), sans nécessiter de communication avec le TPE. Les étapes mise en oeuvre pour une telle télécollecte seront similaires à celles décrites ci-dessus pour le téléparamétrage. Dans certains modes de réalisation, l'étape de traitement (52) du message par l'application (210) du terminal (2) comporte les étapes suivantes :
- analyse (60) du message et de l'instruction du serveur (3) de transaction,
- détermination (61) d'au moins une action et/ou d'au moins un échange de données avec la carte (1) à effectuer pour répondre à l'instruction,
- exécution (62) de l'action et/ou de l'échange par ledit terminal (2),
- analyse (63) du(ou des) résultat(s) de l'action et/ou de l'échange, puis création (64) d'une réponse.

Ensuite, l'étape de transmission (53) au serveur (3) de transaction d'un message de réponse intégrant le(s) résultat(s) permet au serveur (3) de réaliser le traitement (54) de la réponse et l'utilisation pour collecter les informations requises par les paramètres (P). L'application de transaction (310) du serveur est configurée pour collecter des informations déterminées. Elle peut être configurée pour les collecter toutes pour les envoyer au serveur acquéreur (4) en une fois ou pour les collecter et les transmettre successivement au serveur acquéreur (4). Lorsque le serveur de transaction (3) a collecté les informations déterminées, il les transmet au serveur acquéreur (4) qui peut valider (ou interdire) la transaction, ou bien en requérir d'autres, par exemple en renvoyant d'autres données au serveur (3) de transaction.

Dans certains modes de réalisation, l'étape d'analyse (60) de l'instruction par ledit terminal (2) comporte une étape de contrôle de l'instruction par rapport à des données déjà obtenues auprès de la carte (1). Dans certains modes de réalisation, l'étape d'exécution (62) de l'action et/ou de l'échange est accompagnée d'au moins une étape d'utilisation de données fournies par la carte (1) lors d'au moins un échange antérieur. Dans certains modes de réalisation, l'étape d'exécution (62) de l'action et/ou de l'échange est accompagnée d'au moins une étape d'utilisation de données représentatives d'au moins une action du porteur de la carte (1) sur des moyens d'interaction du terminal (2).

On comprend donc que certains modes de réalisation de la présente invention prévoit une communication bidirectionnelle (un dialogue) entre la carte et le serveur, notamment avec une pluralité d'échanges d'informations dans certains modes de réalisation (en fonction des paramètres (P) définissant des informations nécessaires à la transaction), au lieu de se limiter à des transmissions unidirectionnelles des informations lues de la carte comme dans certaines solutions de l'art antérieur. L'invention permet ainsi l'implémentation de mécanismes de sécurité répondant aux exigences élevées de certains standards bancaires, notamment en permettant la sélection de l'application de paiement de la carte par le serveur, l'authentification de l'application EMV de la carte, la signature de la transaction du serveur par la carte, etc.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Serveur (3) de transaction, via au moins un réseau de communication (RC), entre un porteur d'une carte (1) lue par un terminal (2) de transaction et au moins un serveur (4) d'au moins un acquéreur fournissant des paramètres (P) définissant des informations nécessaires à la transaction, ledit serveur (3) de transaction comportant des moyens (31) de traitement de données et des moyens de communication (32) avec ledit terminal (2) et ledit serveur acquéreur (4), via ledit réseau (RC), ledit terminal (2) comportant des moyens (20) d'échange de données avec au moins une carte, des moyens de communication (22) via ledit réseau (RC) et des moyens (21) de traitement de données, ledit serveur (3) de transaction étant **caractérisé en ce que** :
- lesdits moyens de traitement (31) du serveur (3) exécutent au moins une application (310) de transaction configurée d'après lesdits paramètres (P),
- ladite application de transaction (310) est agencée pour contrôler ledit terminal (2) en coopérant, au travers dudit réseau, avec au moins une application (210) exécutée sur lesdits moyens de traitement (21) du terminal (2), par l'intermédiaire d'un message généré d'après lesdits paramètres (P) et transmis audit terminal (2) pour chacune desdites informations, chaque message comprenant des données représentatives d'au moins une instruction à traiter,
- ladite instruction est formatée par ladite application de transaction (310), pour définir au moins une action et/ou au moins un échange de données avec la carte à réaliser par le terminal (2), l'application (210) de ce dernier étant agencée pour fournir audit serveur (3) un message de réponse comprenant des données représentatives du résultat du traitement de ladite instruction,
- ladite application de transaction (310) du serveur (3) est également agencée pour utiliser les résultats reçus du terminal (2) pour collecter et fournir au serveur acquéreur (4) lesdites informations nécessaires à la transaction.

2. Serveur de transaction selon la revendication 1, **caractérisé en ce que** les instructions de chaque message sont agencées pour que l'application (210) du terminal (2) détermine une pluralité de commandes APDU correspondant auxdits échanges de données avec la carte et effectue ces échanges via lesdits moyens (20) d'échange de données, ladite application (210) du terminal (2) étant agencée pour contrôler la succession de commandes effectuées par lesdits moyens (20) d'échange de données, pour recueillir les données fournies par la carte (1) et formater en conséquence le message de réponse à destination dudit serveur (3).

3. Serveur selon une des revendications 1 et 2, **caractérisé en ce qu'**il est agencé pour obtenir lesdits paramètres (P) de l'acquéreur par téléparamétrage via ledit réseau (RC) en contactant ledit serveur acquéreur (4) et en lui fournissant les paramètres relatifs à l'accepteur, ledit serveur acquéreur (4) étant agencé pour lui fournir en retour les paramètres (P) lui permettant d'initialiser et d'activer l'application (310) de transaction.

4. Serveur selon une des revendication 1 à 3, **caractérisé en ce qu'**il est agencé pour reconnaître ledit terminal (2) lorsque ce dernier s'y connecte pour la première fois, puis pour référencer et initialiser ce terminal pour permettre la réalisation des transactions futures.

5. Serveur selon une des revendications 3 et 4, **caractérisé en ce que** le télé-paramétrage du serveur de transaction (3) et/ou le référencement et l'initialisation du terminal (2) est(ou sont) initié(s) par l'accepteur au travers d'une interface homme machine (IHM) accessible via ledit réseau (RC).

6. Terminal (2) de transaction, pour réaliser une transaction via au moins un réseau de communication (RC), entre un porteur d'une carte (1) lue par ledit terminal (2) et au moins un serveur (4) d'au moins un acquéreur fournissant des paramètres (P) définissant des informations nécessaires à la transaction, ledit terminal (2) comportant des moyens (20) d'échange de données avec au moins une carte (1), des moyens de communication (22) via ledit réseau (RC) et des moyens (21) de traitement de données, ledit terminal (2) de transaction étant **caractérisé en ce que**:
- lesdits moyens de communication (22) du terminal (2) sont agencés pour communiquer avec au moins un serveur (3) de transaction comportant des moyens de communication (32) avec ledit terminal (2) et ledit serveur acquéreur (4), via ledit réseau (RC), et des moyens (31) de traitement de données exécutant au moins une application (310) de transaction configurée d'après lesdits paramètres (P),
- lesdits moyens de traitement (21) du terminal (2) exécutent une application (210) agencée pour permettre le contrôle du terminal (2) par ladite application (310) de transaction du serveur (3) en coopérant avec cette dernière, au travers dudit réseau (RC), par l'intermédiaire d'un message généré d'après lesdits paramètres (P) et transmis audit terminal (2) pour chacune desdites informations, chaque message comprenant des données représentatives d'au moins une instruction à traiter, pour définir au moins une action et/ou au moins un échange de données avec la carte à réaliser par le terminal (2),
- ladite application (210) du terminal est agencée pour traiter ladite instruction et fournir audit serveur (3) un message de réponse comprenant des données représentatives du résultat du traitement de ladite instruction, de manière à ce que ladite application (310) du serveur (3) puisse utiliser les résultats qui lui sont envoyés pour collecter et fournir au serveur acquéreur (4) lesdites informations nécessaires à la transaction.

7. Terminal selon la revendication 6, **caractérisé en ce qu'**il communique également avec un module de routage (6) agencé pour organiser les échanges de données entre le terminal (2) et au moins une caisse (7) de l'accepteur et/ou au moins une imprimante (8) de l'accepteur.

8. Terminal selon une des revendications 6 et 7, **caractérisé en ce que** ladite application (210) du terminal (2) est agencée pour:
- analyser le message et l'instruction du serveur (3) de transaction et éventuellement contrôler l'instruction par rapport à des données déjà obtenues auprès de la carte (1),
- déterminer au moins une action à effectuer et/ou au moins un échange de données à effectuer avec la carte (1) pour répondre à l'instruction,
- exécuter l'action et/ou l'échange, le cas échéant selon au moins un traitement effectué par la carte au fur et à mesure des échanges, éventuellement en fonction d'actions requises du porteur de la carte (1),
- analyser le(s) résultat(s) de l'action et/ou de l'échange, puis générer et transmettre au serveur (3) de transaction un message de réponse intégrant le(s) résultat(s).

9. Procédé de transaction via au moins un réseau de communication (RC), entre un porteur d'une carte (1) lue par un terminal (2) de transaction et un serveur (4) d'au moins un acquéreur, ledit terminal (2) comprenant des moyens d'interaction avec le porteur, des moyens (20) d'échange de données avec au moins une carte (1), des moyens de communication (22) et des moyens (21) de traitement de données pour requérir la transaction, le procédé étant **caractérisé en ce qu'**il est mis en oeuvre par une application (210) exécutée sur lesdits moyens de traitement (21) et coopérant avec une application (310) de transaction exécutée sur des moyens (31) de traitement de données d'un serveur (3) de transaction, grâce à des moyens de communication (32), et configurée d'après des paramètres (P) fournis par ledit acquéreur et définissant des informations nécessaires à la transaction, obtenues par au moins une étape de transmission (50) entre le serveur (3) de transaction et le serveur (4) acquéreur, suite à au moins une itération des étapes suivantes :
- transmission (51) d'un message au terminal (2), par ladite application (310) de transaction, chaque message comprenant des données représentatives d'au moins une instruction à traiter par le terminal (2),
- traitement (52) de ladite instruction par l'application (210) du terminal (2), par au moins un échange de données avec la carte (1) et/ou au moins une action sur lesdits moyens d'interaction,
- transmission (53) d'un message de réponse comprenant des données représentatives du résultat du traitement de ladite instruction, par le terminal (2) au serveur (3),
- traitement (54) dudit message de réponse et utilisation du résultat par ladite application (310) du serveur (3) pour collecter lesdites informations.

10. Procédé selon la revendication 9, **caractérisé en ce qu'**il comporte au moins une étape de télé-paramétrage (56) du serveur (3) de transaction via ledit réseau (RC), pour obtenir lesdits paramètres (P) de l'acquéreur, en contactant ledit serveur acquéreur (4) et en lui fournissant les paramètres relatifs à l'accepteur, ledit serveur acquéreur (4) lui fournissant en retour les paramètres (P) lui permettant d'initialiser et d'activer l'application (310) de transaction.

11. Procédé selon une des revendications 9 et 10, **caractérisé en ce qu'**il comporte au moins une étape d'initialisation dudit terminal (2) grâce à une reconnaissance dudit terminal (2) par le serveur (3) de transaction lorsque ledit terminal (2) s'y connecte pour la première fois, puis un référencement et une initialisation dudit terminal (2) pour permettre la réalisation des transactions futures grâce à ladite application (210) du terminal (2).

12. Procédé selon une des revendications 10 et 11, **caractérisé en ce que** les étapes de télé-paramétrage du serveur de transaction (3) et/ou de d'initialisation du terminal (2) est(ou sont) initiée(s) par l'accepteur au travers d'une interface homme machine (IHM) accessible via ledit réseau (RC).

13. Procédé selon une des revendications 9 à 12, **caractérisé en ce qu'**il comporte les étapes suivantes, mises en oeuvre lors de la réception d'un message de ladite application (310) du serveur (3) par ladite application (210) du terminal (2):
- analyse (60) du message et de l'instruction du serveur (3) de transaction,
- détermination (61) d'au moins une action et/ou d'au moins un échange de données avec la carte (1) à effectuer pour répondre à l'instruction,
- exécution (62) de l'action et/ou de l'échange par ledit terminal (2),
- analyse (63) du(ou des) résultat(s) de l'action et/ou de l'échange, puis génération et transmission au serveur (3) de transaction d'un message de réponse intégrant le(s) résultat(s).

14. Procédé selon la revendication 13, **caractérisé en ce que** l'étape d'analyse (60) de l'instruction par ledit terminal (2) comporte une étape de contrôle de l'instruction par rapport à des données déjà obtenues auprès de la carte (1).

15. Procédé selon une des revendications 13 et 14, **caractérisé en ce que** l'étape d'exécution (62) de l'action et/ou de l'échange est accompagnée d'au moins une étape d'utilisation de données fournies par la carte (1) lors d'au moins un échange antérieur.

16. Procédé selon une des revendications 13 à 15, **caractérisé en ce que** l'étape d'exécution (62) de l'action et/ou de l'échange est accompagnée d'au moins une étape d'utilisation de données représentatives d'au moins une action du porteur de la carte (1) sur des moyens d'interaction du terminal (2).
